# EUROPEAN PATENT APPLICATION

(11) **EP 4 664 255 A1**
(43) Date of publication of application: **17.12.2025**
(21) Application number: 24829876.2
(22) Date of filing: 27.02.2024
(51) Int. Cl.: G06F 3/04817

(54) **CROSS-APPLICATION DATA TRANSMISSION METHOD AND RELATED DEVICE**

(30) Priority: 29.06.2023 CN 202310792999
(71) Applicant: Honor Device Co., Ltd., Shenzhen, Guangdong 518040 (CN)
(72) Inventor: YU, Ziwei, Shenzhen, Guangdong 518040 (CN)
(74) Representative: Isarpatent
(86) International application number: PCT/CN2024/078706
(87) International publication number: WO 2025/001219

(57) **Abstract**

This application provides a cross-application data transmission method and a related device. An electronic device that implements the cross-application data transmission method, such as a mobile phone or a tablet computer, may obtain data such as a picture or a text from a currently displayed interface. After detecting that a user drags the data into a preset hot zone, the electronic device determines one or more applications capable of receiving the data. After detecting an operation of continuing dragging, by the user, the data into a region in which any application icon is located and releasing the data, the electronic device may send the data to a corresponding application, thereby providing the user with a quick and convenient cross-application data transmission service. In another aspect, after detecting that the data is dragged into a floating ball, the electronic device may further directly send the data to an application corresponding to the floating ball, thereby providing the user with another quick and convenient cross-application data transmission service.

## Description

This application claims priority to Chinese Patent Application No. 202310792999.7, filed with the China National Intellectual Property Administration on June 29, 2023 and entitled "CROSS-APPLICATION DATA TRANSMISSION METHOD AND RELATED DEVICE", which is incorporated herein by reference in its entirety.

### TECHNICAL FIELD

This application relates to the field of terminals, and in particular, to a cross-application data transmission method and a related device.

### BACKGROUND

Currently, if a user wants to send some data in one application to another application, the user needs to select the foregoing data, exit the application, open the another application, and then paste the foregoing to-be-transmitted data to the another application. Such complex operations bring the user relatively poor use experience.

### SUMMARY

This application provides a cross-application data transmission method and a related device.

After detecting that a user drags a preset control into a preset hot zone, an electronic device that implements the method, such as a mobile phone or a tablet computer, may trigger a smart transfer service to display one or more icons of applications capable of receiving to-be-transmitted data corresponding to the control. After detecting an operation of continuing dragging, by the user, the control into a region in which any application icon is located and releasing the control, the electronic device may send the data corresponding to the control to a target application corresponding to the application icon, thereby providing the user with a quick and convenient cross-application data transmission service. If detecting that the user drags the preset control into another preset hot zone corresponding to a specific application, the electronic device may directly send the to-be-transmitted data corresponding to the control to the specific application corresponding to the hot zone, thereby providing the user with another quick and convenient cross-application data transmission service targeted for the specific application.

According to a first aspect, this application provides a data sharing method, applied to an electronic device, where a screen of the electronic device includes a first region and a second region, the first region and the second region partially overlap, and the method includes: when detecting a first operation of dragging a first control into a third region, displaying an icon of a first application and an icon of a second application in response to the first operation, where the third region is a region, in the first region, that does not overlap the second region, and the first application is different from the second application; detecting a second operation of continuing dragging the first control into a region in which the icon of the first application is located and releasing the first control; and sharing first data corresponding to the first control with the first application in response to the second operation; and when detecting a third operation of dragging the first control into the second region and releasing the first control, sharing the first data with a third application corresponding to the second region in response to the third operation.

According to implementation of the method provided in the first aspect, the electronic device may set two hot zones, for example, a first hot zone and a second hot zone, where one hot zone corresponds to one specific data sharing method, and there is an overlapping region between the hot zones. The first data is also referred to as to-be-transmitted data. In one scenario, the user may drag the operation control (namely, the first control) corresponding to the to-be-transmitted data into the region, in the first region, that does not overlap the second region. In this case, the electronic device may trigger a smart transfer service to display a plurality of application icons. After detecting an operation of continuing dragging, by the user, the first control into a region in which any application icon is located and releasing the first control, the electronic device may send the to-be-transmitted data corresponding to the first control to an application corresponding to the any application icon, thereby providing the user with a quick, convenient, and smooth cross-application data transmission service.

In another scenario, the user may drag the first control into the second region. In this case, the electronic device may send the to-be-transmitted data to the third application corresponding to the second region, thereby providing the user with another quick, convenient, and smooth cross-application data transmission service.

With reference to the method provided in the first aspect, in some embodiments, the method further includes: displaying a first interface, where the first interface includes a text; detecting a fourth operation of selecting a first text from the text; detecting a fifth operation on the first text; and displaying the first control in response to the fifth operation, where the first data includes the first text.

According to implementation of the method provided in the foregoing embodiments, when the electronic device displays an interface, and the interface includes data that the user wants to share, the electronic device can support the user in selecting the data (namely, the first text) that the user wants to share. After detecting the fifth operation on the first text, for example, a touch and hold operation, the electronic device may display the first control for dragging. In this case, after triggering smart transfer and determining a target application, the electronic device may send the first text corresponding to the first control to the target application. After detecting that the first control has been dragged into the second region, the electronic device may send the first text corresponding to the first control to the third application corresponding to the second region.

In some embodiments, all or some content of the first text may be displayed on the first control. In this way, the user can intuitively determine specific content of a to-be-transmitted text at any time.

With reference to the method provided in the first aspect, in some embodiments, the method further includes: displaying a first interface, where the first interface includes a first image; detecting a sixth operation on the first image; and displaying the first control in response to the sixth operation, where the first data includes the first image.

According to implementation of the method provided in the foregoing embodiments, the user may further select an image on an interface, and share the image with another application by using either data sharing method corresponding to the first region or the second region.

In some embodiments, a thumbnail of the first image may be displayed on the first control. In this way, the user can intuitively determine specific content of a to-be-transmitted image at any time.

With reference to the method provided in the foregoing embodiments, in some embodiments, the second region is a display region of a first floating ball, the first floating ball is a floating ball of the third application, and an icon and/or a name of the third application are/is displayed in the first floating ball.

According to implementation of the method provided in the foregoing embodiments, by using the method for dragging the first control into a floating ball of an application, the user can quickly and conveniently send the to-be-transmitted data corresponding to the first control to the application.

With reference to the method provided in the foregoing embodiments, in some embodiments, after the sharing the first data with a third application corresponding to the second region, the method further includes: displaying a first identifier on the first floating ball, where the first identifier is used to indicate that the first data has been shared.

According to implementation of the method provided in the foregoing embodiments, the user may determine, by using the first identifier, that the selected to-be-transmitted data has been successfully written to the application corresponding to the floating ball, so as to further determine whether to view the newly written data.

With reference to the method provided in the foregoing embodiments, in some embodiments, the first floating ball includes a first style and a second style, and after the displaying a first identifier on the first floating ball, the method further includes: switching the first floating ball of the first style to the second style, where a display region occupied by the first floating ball of the first style on the screen is greater than a display region occupied by the first floating ball of the second style on the screen.

According to implementation of the method provided in the foregoing embodiments, when the user does not need to use the foregoing floating ball, the electronic device may switch the floating ball to the second style, which is also referred to as an incomplete style or a thumbnail state, so as to reduce the display region of the floating ball, and reduce occlusion on the screen by the floating ball. Correspondingly, when the user needs to use the foregoing floating ball, for example, needs to drag to-be-transmitted data into the floating ball, the electronic device may switch the floating ball of the second style to the first style, which is also referred to as a complete style or an unfolded state, so as to expand a receiving hot zone, thereby reducing a precision requirement of a drag operation of the user, and providing the user with smoother operation experience.

With reference to the method provided in the foregoing embodiments, in some embodiments, the first application is different from the third application, and after the sharing first data corresponding to the first control with the first application, the method further includes: displaying a second floating ball corresponding to the first application, where the icon and/or a name of the first application are/is displayed in the second floating ball.

According to implementation of the method provided in the foregoing embodiments, after quick and convenient data sharing is completed once by using smart transfer, the electronic device may display a floating ball of a target application of this smart transfer. In this way, if the user needs to continue to send data to the application subsequently, the data can be sent to the application more quickly and conveniently in a manner of dragging the data into the floating ball of the application, with no need to select a target application from a plurality of applications recommended by the smart transfer.

With reference to the method provided in the foregoing embodiments, in some embodiments, the first region includes a right-side hot zone and/or a left-side hot zone, the right-side hot zone is a rectangular touch region determined based on a right side of the screen, and the left-side hot zone is a rectangular touch region determined based on a left side of the screen. The second region may overlap either of the right-side hot zone and the left-side hot zone, or may overlap both of the hot zones.

With reference to the method provided in the foregoing embodiments, in some embodiments, the first application and the second application are applications that are capable of receiving the first data and that are determined based on a type and/or semantic information of the first data.

For example, when the first data (that is, the to-be-transmitted data) is a text, the first application and the second application may be applications that are capable of receiving the text and that are determined based on the image and image content, for example, a Notes application, an instant messaging application, or a calendar application. When the first data is an image, the first application and the second application may be applications that are capable of receiving the image and that are determined based on the image and image content, for example, a Notes application, an instant messaging application, a picture edit application, or a shopping application. In this way, for to-be-transmitted data selected by any user, the electronic device may automatically determine an application that matches the to-be-transmitted data and that can be used as a target application, and further display a corresponding icon for selection by the user.

With reference to the method provided in the foregoing embodiments, in some embodiments, the displaying an icon of a first application and an icon of a second application specifically includes: displaying the icon of the first application and the icon of the second application on the right side or the left side of the screen, where the icon of the first application and the icon of the second application are vertically arranged.

With reference to the method provided in the foregoing embodiments, in some embodiments, after the sharing first data corresponding to the first control with the first application, the method further includes: stopping displaying the icon of the first application and the icon of the second application.

In this way, after the smart transfer is completed, that is, after the to-be-transmitted data is successfully transmitted to the selected target application, the electronic device may disable, at any time, the plurality of application icons displayed after the smart transfer is triggered, and then switch an interface currently displayed by the electronic device back to an interface displayed before the smart transfer is triggered, so that the user continues with another operation, such as browsing or editing, being performed before the smart transfer.

According to a second aspect, this application provides a data sharing method, applied to an electronic device, where a screen of the electronic device includes a first region and a second region, the first region and the second region partially overlap, and the method includes: when detecting a first operation of dragging a first control into a first region, displaying an icon of a first application and an icon of a second application in response to the first operation; detecting a second operation of continuing dragging the first control into a region in which the icon of the first application is located and releasing the first control; and sharing first data corresponding to the first control with the first application in response to the second operation; and when detecting a third operation of dragging the first control into a fourth region and releasing the first control, sharing the first data with a third application corresponding to the fourth region in response to the third operation, where the fourth region is a region, in the second region, that does not overlap the first region.

According to implementation of the method provided in the second aspect, the electronic device may set two hot zones, for example, a first hot zone and a second hot zone, where one hot zone corresponds to one specific data sharing method, and there is an overlapping region between the hot zones. The first data is also referred to as to-be-transmitted data. In one scenario, the user may drag the operation control (namely, the first control) corresponding to the to-be-transmitted data into the first region. In this case, the electronic device may trigger a smart transfer service to display a plurality of application icons. After detecting an operation of continuing dragging, by the user, the first control into a region in which any application icon is located and releasing the first control, the electronic device may send the to-be-transmitted data corresponding to the first control to an application corresponding to the any application icon, thereby providing the user with a quick, convenient, and smooth cross-application data transmission service.

In another scenario, the user may drag the first control into a region, in the second region, that does not overlap the first region. In this case, the electronic device may send the to-be-transmitted data to the third application corresponding to the second region, thereby providing the user with another quick, convenient, and smooth cross-application data transmission service.

With reference to the method provided in the second aspect, in some embodiments, the screen includes a first window and a second window, the first window is configured to display a user interface of a fourth application, the second window is configured to display a user interface of the third application, the second region is a display region of the second window, and the method further includes: selecting the first data from the first window; and detecting a fourth operation on the first data, and displaying the first control in response to the fourth operation.

According to implementation of the method provided in the foregoing embodiments, when the electronic device simultaneously displays a plurality of windows, and different windows correspond to different applications, the electronic device may support the user in selecting, from one window, data that needs to be shared, that is, to-be-transmitted data, and then support the user in sending the to-be-shared data to an application corresponding to another window by dragging the to-be-shared data into the another window.

With reference to the method provided in the foregoing embodiments, in some embodiments, the first window and the second window are tiled for display, and areas of one window and the second window are equal to an area of the screen; or the second window is displayed in a form of a floating window over the first window; or the first window is displayed in a form of a floating window over the second window.

With reference to the method provided in the foregoing embodiments, in some embodiments, some or all content of the first data is displayed on the first control. In this way, the user can intuitively determine specific content of a to-be-transmitted image at any time.

With reference to the method provided in the foregoing embodiments, in some embodiments, the selecting the first data from the first window specifically includes: obtaining a text in the first window; and selecting a first text from the text in the first window, where the first data includes the first text.

With reference to the method provided in the foregoing embodiments, in some embodiments, the selecting the first data from the first window specifically includes: selecting a first image from one or more images displayed in the first window, where the first data includes the first image.

According to implementation of the method provided in the foregoing embodiments, the electronic device may support the user in selecting data such as a text or an image for cross-application sharing.

With reference to the method provided in the foregoing embodiments, in some embodiments, after the sharing the first data with a third application corresponding to the fourth region, the method further includes: displaying the first data in the second region.

According to implementation of the method provided in the foregoing embodiments, the user may immediately edit the first data in the third application corresponding to the second region. In another method, when the transmission fails, the first data does not exist in the second region. In this way, the user can also quickly determine whether the transmission succeeds. When the transmission does not succeed, the user may immediately repeat the foregoing sharing operation, and write the data to the third application again.

With reference to the method provided in the foregoing embodiments, in some embodiments, the first region includes a right-side hot zone and/or a left-side hot zone, the right-side hot zone is a rectangular touch region determined based on a right side of the screen, and the left-side hot zone is a rectangular touch region determined based on a left side of the screen. The second region may overlap either of the right-side hot zone and the left-side hot zone, or may overlap both of the hot zones.

With reference to the method provided in the foregoing embodiments, in some embodiments, the first application and the second application are applications that are capable of receiving the first data and that are determined based on a type and/or semantic information of the first data.

For example, when the first data (that is, the to-be-transmitted data) is a text, the first application and the second application may be applications that are capable of receiving the text and that are determined based on the image and image content, for example, a Notes application, an instant messaging application, or a calendar application. When the first data is an image, the first application and the second application may be applications that are capable of receiving the image and that are determined based on the image and image content, for example, a Notes application, an instant messaging application, a picture edit application, or a shopping application. In this way, for to-be-transmitted data selected by any user, the electronic device may automatically determine an application that matches the to-be-transmitted data and that can be used as a target application, and further display a corresponding icon for selection by the user.

With reference to the method provided in the foregoing embodiments, in some embodiments, the displaying an icon of a first application and an icon of a second application specifically includes: displaying the icon of the first application and the icon of the second application on the right side or the left side of the screen, where the icon of the first application and the icon of the second application are vertically arranged.

With reference to the method provided in the foregoing embodiments, in some embodiments, after the sharing first data corresponding to the first control with the first application, the method further includes: stopping displaying the icon of the first application and the icon of the second application.

In this way, after the smart transfer is completed, that is, after the to-be-transmitted data is successfully transmitted to the selected target application, the electronic device may disable, at any time, the plurality of application icons displayed after the smart transfer is triggered, and then switch an interface currently displayed by the electronic device back to an interface displayed before the smart transfer is triggered, so that the user continues with another operation, such as browsing or editing, being performed before the smart transfer.

According to a third aspect, this application provides an electronic device. The electronic device includes one or more processors and one or more memories. The one or more memories are coupled to the one or more processors. The one or more memories are configured to store computer program code, and the computer program code includes computer instructions. When the one or more processors execute the computer instructions, the electronic device is enabled to perform the method described in any one of the first aspect and the possible implementations of the first aspect, or perform the method described in any one of the second aspect and the possible implementations of the second aspect.

According to a fourth aspect, an embodiment of this application provides a chip system. The chip system is applied to an electronic device. The chip system includes one or more processors. The processor is configured to invoke computer instructions to enable the electronic device to perform the method described in any one of the first aspect and the possible implementations of the first aspect, or perform the method described in any one of the second aspect and the possible implementations of the second aspect.

According to a fifth aspect, this application provides a computer-readable storage medium including instructions. When the instructions are run on an electronic device, the electronic device is enabled to perform the method described in any one of the first aspect and the possible implementations of the first aspect, or perform the method described in any one of the second aspect and the possible implementations of the second aspect.

According to a sixth aspect, this application provides a computer program product including instructions. When the computer program product runs on an electronic device, the electronic device is enabled to perform the method described in any one of the first aspect and the possible implementations of the first aspect, or perform the method described in any one of the second aspect and the possible implementations of the second aspect.

It may be understood that, the electronic device provided in the third aspect, the chip system provided in the fourth aspect, the computer storage medium provided in the fifth aspect, and the computer program product provided in the sixth aspect are all configured to perform the method provided in this application. Therefore, for beneficial effects that can be achieved by the electronic device, the chip system, the computer storage medium, and the computer program product, refer to the beneficial effects in the corresponding method. Details are not described herein.

### BRIEF DESCRIPTION OF DRAWINGS

FIG. 1A-FIG. 1H are a group of user interfaces for implementing cross-application data transmission according to an embodiment of this application;
FIG. 2A-FIG. 2F are a group of user interfaces for implementing cross-application data transmission according to an embodiment of this application;
FIG. 3A-FIG. 3E are a group of user interfaces for implementing cross-application data transmission according to an embodiment of this application;
FIG. 4A-FIG. 4C are schematic diagrams of hot zones of an electronic device 100 according to an embodiment of this application;
FIG. 5A-FIG. 5J are another group of user interfaces for implementing cross-application data transmission in an application-based split-screen scenario according to an embodiment of this application;
FIG. 6A-FIG. 6C are schematic diagrams of hot zones of an electronic device 100 in an application-based split-screen scenario according to an embodiment of this application;
FIG. 7A-FIG. 7G are another group of user interfaces for implementing cross-application data transmission in a horizontal split-screen scenario according to an embodiment of this application;
FIG. 8A-FIG. 8B are schematic diagrams of hot zones of an electronic device 100 in a horizontal split-screen scenario according to an embodiment of this application;
FIG. 9A-FIG. 9G are another group of user interfaces for implementing cross-application data transmission in a floating window-based split-screen scenario according to an embodiment of this application;
FIG. 10A-FIG. 10B are schematic diagrams of hot zones of an electronic device 100 in a floating window-based split-screen scenario according to an embodiment of this application;
FIG. 11A-FIG. 11B are flowcharts of cross-application data transmission according to an embodiment of this application; and
FIG. 12 is a schematic diagram of a structure of an electronic device 100 according to an embodiment of this application.

### DESCRIPTION OF EMBODIMENTS

Terms used in the following embodiments of this application are merely intended to describe specific embodiments, but not intended to limit this application.

In a current cross-application data transmission scenario, after determining to-be-transmitted data in one application, a user needs to exit the application, open another application, and then paste the to-be-transmitted data to the another application. Such complex operations bring the user relatively poor use experience.

In view of this, an embodiment of this application provides a cross-application data transmission method. The method may be applied to an electronic device (denoted as an electronic device 100), such as a mobile phone or a tablet computer.

In the method, the electronic device 100 may generate a corresponding operation control after obtaining to-be-transmitted data such as a text, a picture, a video, or a document. After detecting that a user drags a preset operation control into a preset hot zone, the electronic device 100 may trigger a smart transfer service to display one or more icons of applications that match to-be-transmitted data corresponding to the operation control and that are capable of receiving the to-be-transmitted data. Further, after detecting an operation of continuing dragging, by the user, the operation control into a region in which any application icon is located and releasing the operation control, the electronic device 100 may send the to-be-transmitted data corresponding to the operation control to an application (a target application) corresponding to the selected application icon, thereby providing the user with a quick, convenient, and smooth cross-application data transmission service.

After performing smart transfer, the electronic device 100 may display a floating ball corresponding to the target application. When the floating ball is further displayed on a screen, the electronic device 100 may send, based on an operation of dragging the operation control into a floating ball hot zone by the user, the to-be-transmitted data corresponding to the operation control to the application corresponding to the floating ball, thereby implementing quicker and more convenient cross-application data transmission.

In an application-based split-screen scenario, an end point of a drag operation may alternatively be a hot zone, on a user interface, corresponding to one application on the screen. After detecting that the user drags the foregoing operation control into a split-screen application hot zone, the electronic device 100 may further send the to-be-transmitted data corresponding to the operation control to an application corresponding to the split-screen application hot zone.

In addition to a mobile phone or a tablet computer, the electronic device 100 may alternatively be a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in this embodiment of this application.

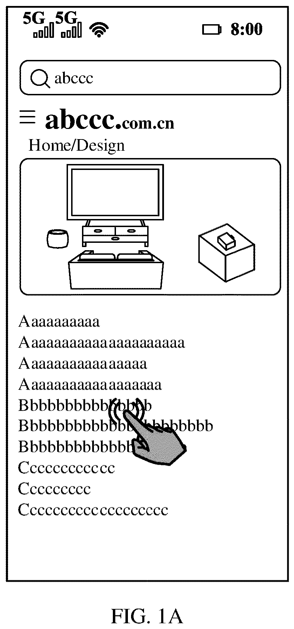

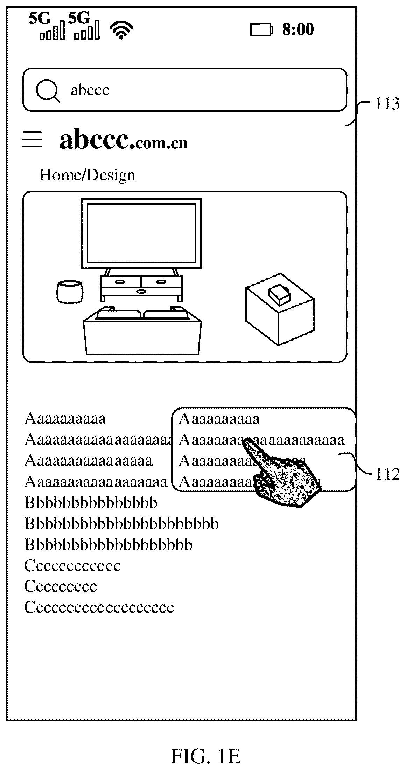

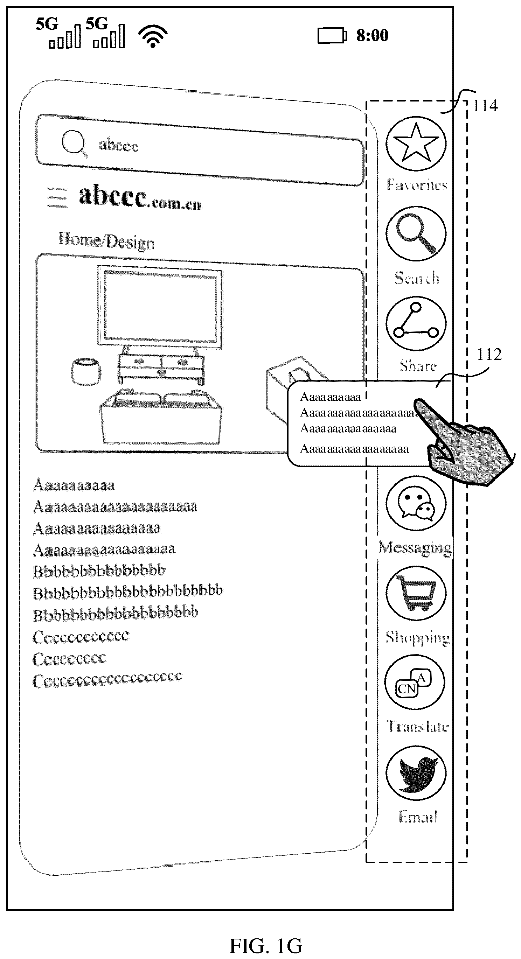

FIG. 1A-FIG. 1H are a group of user interfaces for implementing cross-application data transmission according to an embodiment of this application.

FIG. 1A is a user interface according to an embodiment of this application.

An application that provides the user interface may be a system application, or may be a three-party application. In this embodiment of this application, the system application is an application that is directly provided by an operating system of the electronic device 100 and that is used to implement a specific function. The three-party application is an application that is obtained by the electronic device 100 over the Internet, that is provided by another developer, and that is used to implement a specific function.

In some embodiments, the foregoing user interface may alternatively be a homepage (homepage), a leftmost home screen, a lock screen interface, or the like of the electronic device 100. This is not limited in this embodiment of this application.

In a process of displaying the user interface shown in FIG. 1A, the electronic device 100 may detect a touch and hold operation performed on the screen. In response to the foregoing operation, the electronic device 100 may obtain a text on the user interface shown in FIG. 1A, for copy by the user. In addition to the touch and hold operation, a user operation such as a double-tap operation or a preset slide operation with a specific trajectory is also available. This is not limited in this embodiment of this application.

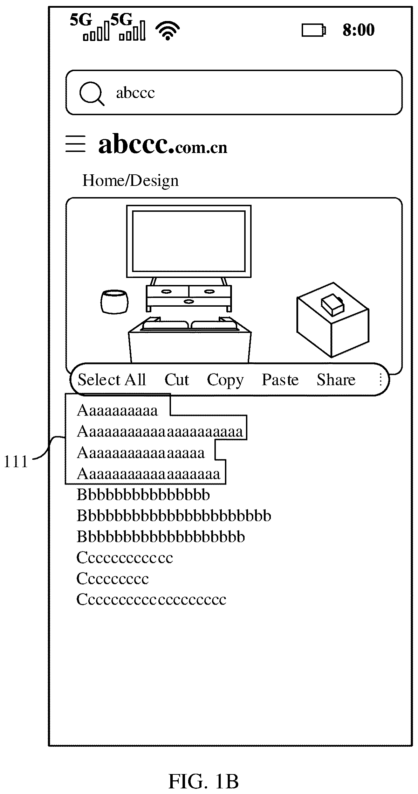

Then, the electronic device 100 may detect a specific user operation of selecting a text. The electronic device 100 may determine, based on the user operation of selecting a text, a target text that the user wants to copy. Referring to FIG. 1B, for example, the electronic device 100 may determine a target text 111 based on the user operation.

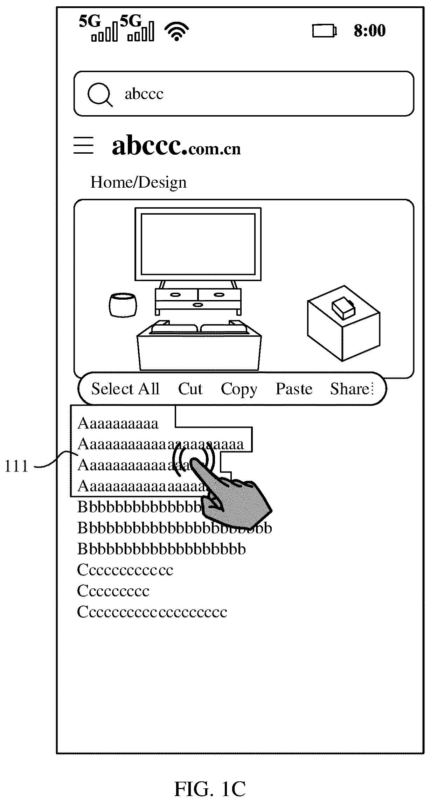

Referring to FIG. 1C-FIG. 1D, after determining the target text 111, the electronic device 100 may detect a touch and hold operation performed on the target text 111. In response to the foregoing operation, the electronic device 100 may display a control 112 in a floating state, that is, a draggable control 112. A display position of a control in a floating state can be adjusted in real time by following a drag operation performed by the user on the screen.

In some embodiments, in a touch and hold operation, a touch point between the user's finger and the screen corresponds to a midpoint of an upper edge of the control 112. In some other embodiments, a touch point between the user's finger and the screen corresponds to a midpoint, a midpoint of a lower edge, a lower right corner point, or the like of the control 112. This is not limited in this embodiment of this application.

Optionally, the target text 111 may be displayed in the control 112. In some embodiments, when the target text 111 has a relatively large amount of content, the control 112 may display some of the target text 111, such as the first sentence of the target text 111 or a digest of the target text 111.

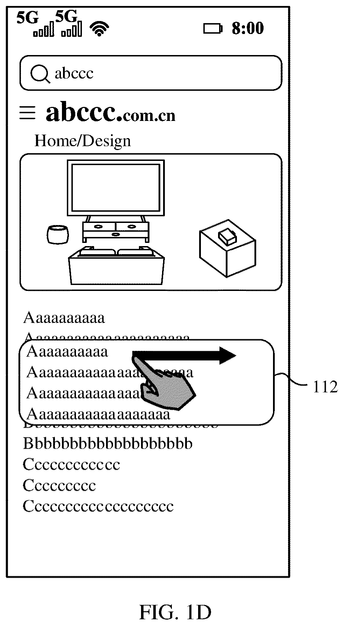

Referring to FIG. 1D-FIG. 1E, the electronic device 100 may detect a user operation of dragging, by the user, the control 112 to slide towards a right side of the screen. After detecting that the control 112 is approaching the right side of the screen, the electronic device 100 may display a glow strip 113. The glow strip 113 may be configured to prompt the user that the control 112 has approached the right side of the screen. In this case, the user may determine to continue sliding rightward to trigger a service corresponding to the right side of the screen, or determine to stop sliding rightward to avoid triggering the service corresponding to the right side of the screen.

Specifically, the electronic device 100 may set a right-side hot zone. A hot zone is a touch region with a fixed shape and size on the screen. The right-side hot zone is a rectangular touch region that extends from an edge on the right side of the screen to that on the other side. The electronic device 100 may determine, by using a distance from a position of a current touch point between a finger and the screen to the right-side hot zone, whether the control 112 is approaching the right side of the screen. Further, when identifying that the current touch point is within the right-side hot zone, the electronic device 100 may determine to trigger the service corresponding to the right side of the screen.

In some embodiments, the electronic device 100 further detects duration in which the touch point resides in the right-side hot zone, to avoid an accidental touch. In this case, a trigger condition changes to the following: When identifying that the current touch point is within the right-side hot zone and residence duration reaches preset duration (for example, 600 ms), the electronic device 100 may determine to trigger the service corresponding to the right side of the screen.

Referring to the control 112 shown in FIG. 1D-FIG. 1E, in a process of dragging the control 112 to slide, the electronic device 100 may reduce a size of the control 112 to reduce occlusion on other content on the screen.

In this embodiment of this application, a service corresponding to the right-side hot zone may be the smart transfer service. The smart transfer service is a service that matches an application capable of receiving to-be-transmitted data and that provides a user with quick sending of the to-be-transmitted data to another target application. The to-be-transmitted data includes but is not limited to a text, a picture, a video, a document, a hyperlink, or the like. The electronic device 100 may determine the to-be-transmitted data based on an operation control used when smart transfer is triggered. For example, in a scenario shown in FIG. 1D-FIG. 1E in which the control 112 is dragged to slide rightward into the right-side hot zone to trigger smart transfer, the control 112 may be referred to as an operation control, and the target text 111 corresponding to the control 112 may be referred to as to-be-transmitted data.

After the smart transfer is triggered, the electronic device 100 may display, on the right side of the screen, a menu bar including one or more candidate application icons. A candidate application is an application that is selected by the electronic device 100 from all installed applications and that is capable of receiving the to-be-transmitted data. The electronic device 100 may determine the candidate application based on an information type and semantic information of the to-be-transmitted data. A matching policy for determining a candidate application based on an information type and semantic information will be specifically described below, and is not elaborated herein.

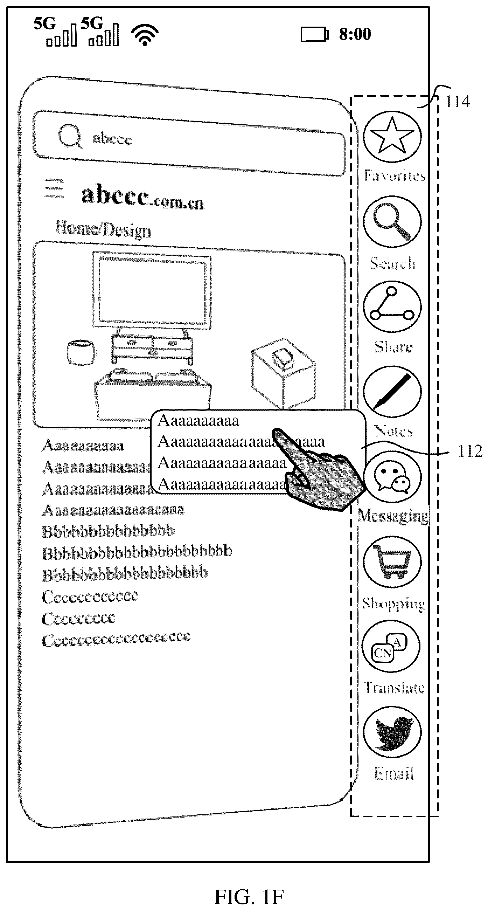

Referring to FIG. 1F, for example, the electronic device 100 may display a menu bar 114. The menu bar 114 may include a Favorites icon, a Search icon, a Share icon, a Notes icon, a Messaging icon, a Shopping icon, a Print icon, an Email icon, and the like. When display of the menu bar 114 is triggered, the control 112 may occlude an application icon displayed in the menu bar 114. In this case, referring to FIG. 1F, the user may drag the control 112 to slide leftward for a distance to remove the occlusion by the control 112 on the application icon displayed in the menu bar 114.

After the menu bar 114 is displayed, the user may determine, by using the icons displayed in the menu bar 114, all candidate applications capable of receiving the to-be-transmitted data, and further determine, in the foregoing candidate applications, a target application for receiving the to-be-transmitted data. For example, the user may select a Notes application as the target application for receiving the to-be-transmitted data.

In addition, the electronic device 100 may adjust an original user interface to a right perspective style, which forms a "door opening" animation effect together with the foregoing menu bar, thereby improving user experience.

The electronic device 100 may determine, by using a method for detecting that the user drags the control 112 to any candidate application icon, that an application corresponding to the any candidate application icon is the target application. Specifically, after it is detected that the user drags the control 112 to the right-side hot zone, smart transfer is triggered, and the menu bar 114 is displayed, the user may continue dragging the control 112 to any candidate application icon. Referring to FIG. 1F-FIG. 1G, the electronic device 100 may detect a user operation of continuing dragging, by the user, the control 112 to the Notes application icon and releasing the control 112. Therefore, the electronic device 100 may determine that the Notes application is the target application.

In some embodiments, to drag a control (for example, the control 112) to an icon (for example, the Notes icon), it is required that a touch point of the drag operation be within the icon. In some other embodiments, the electronic device 100 may set a receiving region that fully encloses the icon, and an area of the receiving region is greater than an area of the icon. In this case, to drag a control to an icon, it is only required that a touch point of the drag operation be within the receiving region.

Subsequently, the electronic device 100 may write to-be-transmitted data (that is, the target text 111) corresponding to the control 112 to the Notes application. After detecting that the control 112 is dragged to the Notes application icon, the electronic device 100 may display the Notes application icon by highlighting, for example, by enlarging or color changing, to prompt the user that the currently selected Notes application is used as the target application to avoid accidental transmission.

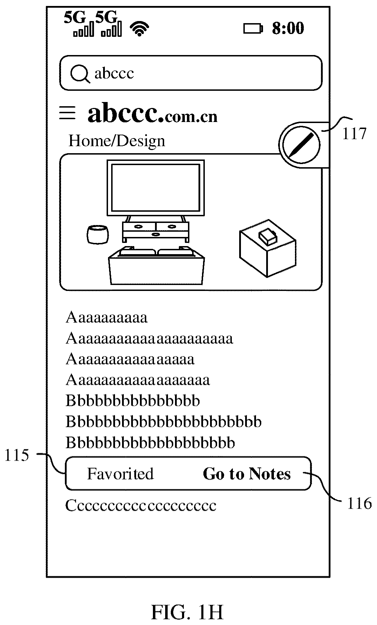

Referring to FIG. 1H, after determining the target application, the electronic device 100 may close the menu bar (snackbar) 114 of the smart transfer service to display the original user interface again. Optionally, the electronic device 100 may further display a prompt window 115. The prompt window 115 may prompt the user that the transfer succeeds, that is, the to-be-transmitted data selected by the user has been successfully written to the target application. The prompt window 115 may further include a control 116. The control 116 may be configured to enable the target application for receiving the foregoing to-be-transmitted data, for example, the Notes application, so that the user continues to edit, in the target application, the data written through the smart transfer.

After triggering the smart transfer and detecting an operation of releasing the control 112 in a region outside the menu bar 114, referring to FIG. 1C, the electronic device 100 may release the control 112, that is, no long display the control 112. Subsequently, after detecting the touch and hold operation shown in FIG. 1C, the electronic device 100 may re-generate and display the control 112 corresponding to the target text 111. After detecting a user operation of dragging the control 112 into the right-side hot zone and releasing the control 112, the electronic device 100 may trigger smart transfer again. Details are not described herein again.

In this embodiment of this application, the electronic device 100 may further display a control 117. The control 117 is also referred to as a floating ball 117. In the foregoing scenario in which the target application is the Notes application, the floating ball 117 corresponds to the Notes application. Subsequently, the user may complete quicker and more convenient smart transfer by using the floating ball 117, to send to-be-transmitted data subsequently determined by the user to the Notes application.

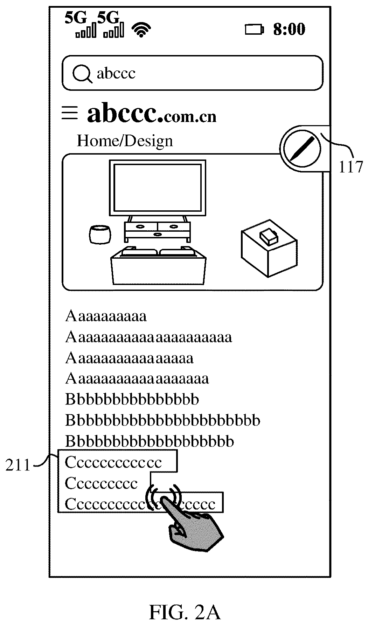

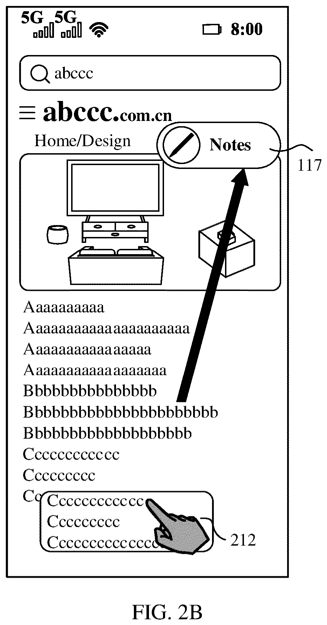

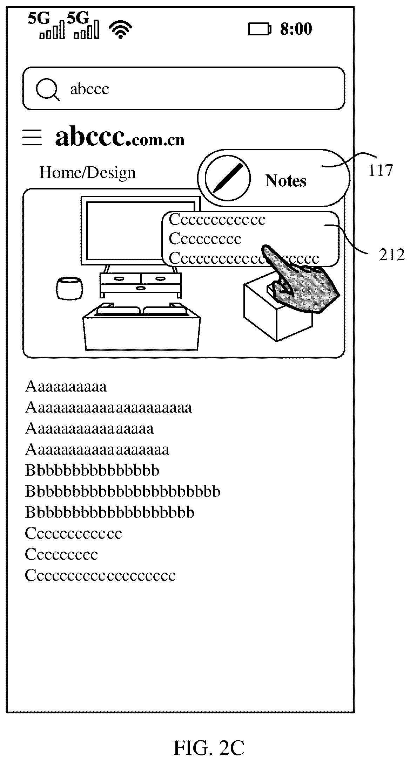

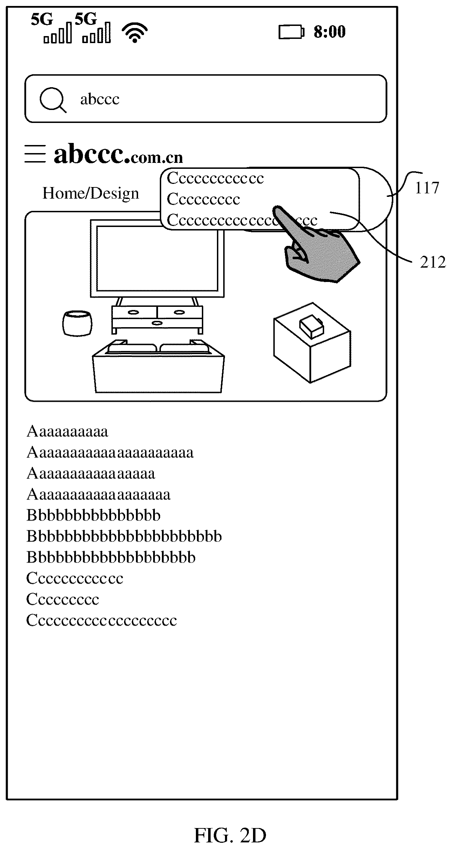

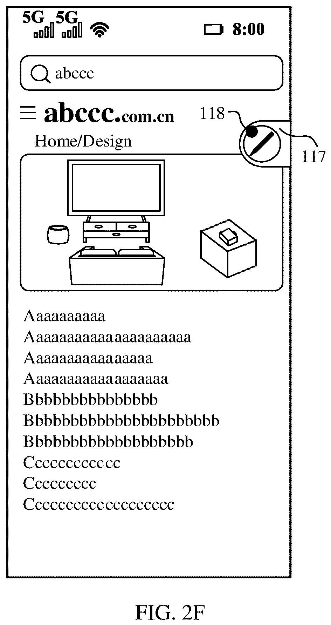

Referring to FIG. 2A-FIG. 2B, the electronic device 100 may detect again a user operation of selecting a target text 211 by the user, and then the electronic device 100 may display a control 212 in a floating state corresponding to the target text 211. Referring to FIG. 2B-FIG. 2D, the electronic device 100 may detect an operation of dragging, by the user, the control 212 into a region in which the floating ball 117 is located. After detecting a user operation of dragging, by the user, the control 212 into the region in which the floating ball 117 is located and releasing the control 212, the electronic device 100 may send the target text 211 corresponding to the control 212 to the Notes application, thereby implementing more convenient cross-application data transmission.

Optionally, the user may alternatively select an image on a currently displayed interface. The electronic device 100 may display a control in a floating state corresponding to the foregoing image. Then, after detecting a user operation of dragging, by the user, the foregoing control into the region in which the floating ball 117 is located and releasing the control, the electronic device 100 may send the image corresponding to the control to the Notes application.

In some embodiments, the electronic device 100 may continue to write received data to a note together with previously received data. In some other embodiments, the electronic device 100 may create another note, and write the data received by using the foregoing operation to the newly created note.

In some embodiments, when the target application is a Favorites application, for data received a plurality times, the Favorites application may further classify the received data based on a type (a text, an image, a document, or the like) of the received data. Optionally, the Favorites application may further classify received data based on a specific application from which the data comes.

The floating ball 117 shown in FIG. 2A may be referred to as a floating ball 117 in an incomplete style or a floating ball 117 in a thumbnail state. Referring to FIG. 2B, while displaying the control 212, the electronic device 100 may switch the floating ball 117 in the thumbnail state to an unfolded state, so as to prompt the user that the Notes application corresponding to the floating ball 117 can receive the target text 211 corresponding to the control 212. A floating ball in an unfolded state is also referred to as a floating ball in a complete style. In addition, a floating ball 117 in a complete style may correspond to a larger receiving hot zone, thereby helping reduce a precision requirement on a drag operation of the user, and provide the user with smoother operation experience. The complete style (that is, the unfolded state) is also referred to as a first style, and the incomplete style (that is, the thumbnail state) is also referred to as a second style.

In some embodiments, the electronic device 100 may detect a distance between the control 212 and the floating ball 117. When detecting that the distance between the control 212 and the floating ball 117 keeps decreasing, that is, the control 212 is approaching the floating ball 117, the electronic device 100 may extend the floating ball 117, that is, gradually display the floating ball 117 in the complete style.

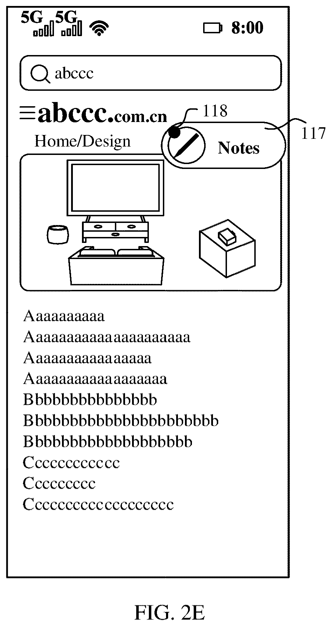

Referring to FIG. 2E, after writing data to the Notes application again, the electronic device 100 may display a control 118 over the floating ball 117. The control 118 is not limited to a circular ball, and may alternatively be a graphic of another style. The control 118 may be configured to indicate that new data is written to the Notes application, so as to prompt the user to view the newly written data. Optionally, the electronic device 100 may indicate, by using a method such as changing a color of the floating ball 117, that new data is written to the Notes application. This is not limited in this embodiment of this application.

After writing data to the Notes application again, the electronic device 100 may display the floating ball 117 in the complete style for a period of time. The period of time is preset, for example, 5 seconds. Referring to FIG. 2E-FIG. 2F, in the foregoing period of time, if detecting no user operation that is performed on the floating ball 117 and that is used to enable the Notes application, for example, an operation of tapping the floating ball 117, the electronic device 100 may hide the floating ball 117, that is, switch the floating ball 117 in the complete style into the floating ball 117 in the incomplete style, so as to reduce a display region of the floating ball 117 and reduce occlusion on the screen by the floating ball 117.

After the floating ball 117 is displayed, the user may continue to trigger smart transfer to send newly determined to-be-transmitted data to the Notes application or another target application by using the smart transfer.

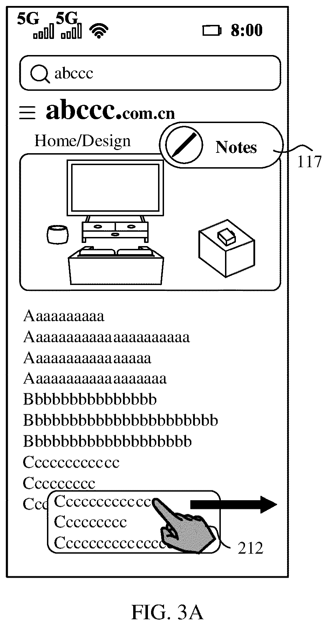

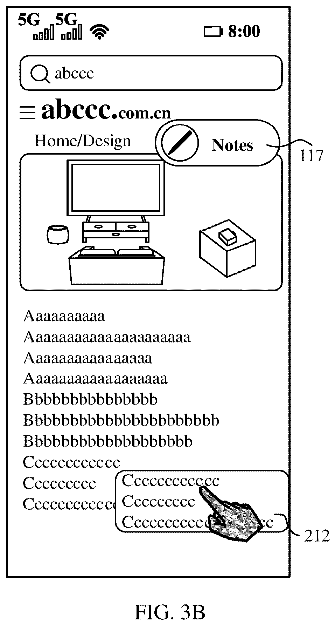

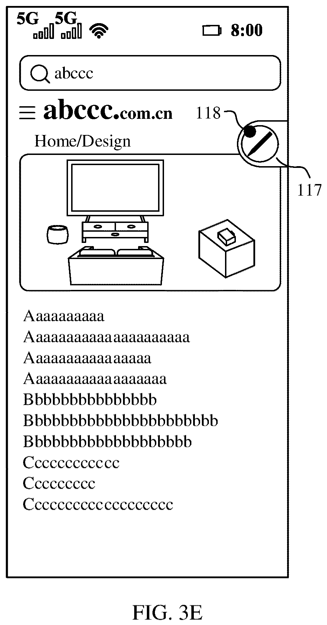

Referring to FIG. 3A-FIG. 3C, after determining the target text 211 and displaying the corresponding control 212 in the floating state again, the electronic device 100 may detect an operation of dragging, by the user, the control 212 to slide rightward and triggering smart transfer. In response to the foregoing operation, the electronic device 100 may display the menu bar 114 again. After triggering the smart transfer, the electronic device 100 may suspend the display of the floating ball 117 to avoid occlusion on the menu bar 114. The electronic device 100 may detect an operation of continuing dragging, by the user, the control 212 to the Notes application icon. After detecting a user operation of continuing dragging, by the user, the control 212 to the Notes application icon and releasing the control 212, the electronic device 100 may send the target text 211 corresponding to the control 212 to the Notes application.

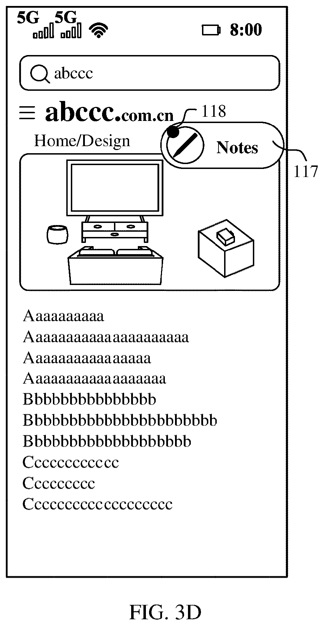

Referring to FIG. 3D, after writing the target text 111 to the Notes application, the electronic device 100 may close the menu bar 114 of the smart transfer service to display an original user interface again. In this case, the electronic device 100 may display the floating ball 117 again. In addition, the electronic device 100 may also display the control 118 over the floating ball 117, to indicate that new data is written to the Notes application, so as to prompt the user to view the newly written data.

In some embodiments, the electronic device 100 may continue to write received data to a note together with previously received data. In some other embodiments, the electronic device 100 may alternatively create another note based on a new smart transfer operation. In a scenario in which another note is created, optionally, the Notes application may also classify and mark each note based on a type (a text, an image, a document, or the like) of received data.

Similarly, as shown in FIG. 3D-FIG. 3E, if no user operation that is performed on the floating ball 117 and that is used to enable the Notes application is detected in a period of time, the electronic device 100 may hide the floating ball 117, so as to reduce a display region of the floating ball 117 and reduce occlusion on the screen by the floating ball 117.

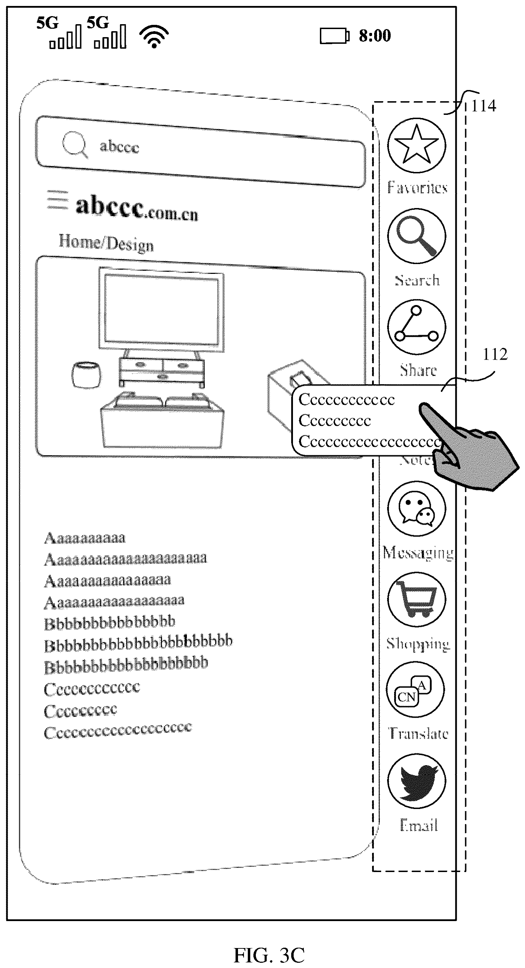

It may be understood that, on a user interface shown in FIG. 3C, the user may alternatively select another candidate application icon in the menu bar 114. In this case, the electronic device 100 may send the target text 211 to an application corresponding to the another candidate application icon. For example, the electronic device 100 may detect an operation of continuing dragging, by the user, the control 212 to the Messaging application icon and releasing the control 212, and then send the target text 211 corresponding to the control 212 to a Messaging application. Alternatively, the electronic device 100 may detect an operation of continuing dragging, by the user, the control 212 to a Translate application icon and releasing the control 212, and then send the target text 211 corresponding to the control 212 to a Translate application.

In some embodiments, when a target application of current smart transfer is different from a target application of previous smart transfer, the electronic device 100 may display, under a floating ball control of the previous target application, a floating ball control corresponding to the current target application. For example, after sending the target text 211 corresponding to the control 212 to the Messaging application, the electronic device 100 may display a floating ball corresponding to the Messaging application under the floating ball 117.

In some other embodiments, when a target application of current smart transfer is different from a target application of previous smart transfer, the electronic device 100 may display, at a position of a floating ball control of the previous target application, a floating ball control corresponding to the current target application to replace the floating ball control of the previous target application. For example, after sending the target text 211 corresponding to the control 212 to the Messaging application, the electronic device 100 may replace the floating ball 117 with the floating ball displaying the Messaging application. In this way, the electronic device 100 can prevent the screen from being occluded by an excessively large quantity of floating balls.

In some embodiments, a data type of to-be-transmitted data determined by the electronic device 100 based on a user operation is different from that of previously determined to-be-transmitted data. In this case, when smart transfer is triggered again, a candidate application adaptively changes based on a type of the current to-be-transmitted data. Correspondingly, a candidate application icon displayed in the menu bar also changes. For example, when the user determines once again that to-be-transmitted data is a picture, a candidate application determined by the electronic device 100 after triggering smart transfer may further include an image edit application. Correspondingly, the menu bar displayed by the electronic device 100 may further include an application icon corresponding to the image edit application.

In some embodiments, the electronic device 100 may also set a left-side hot zone. By using an operation of dragging an operation control (for example, the control 112 or the control 212) to slide leftward into the left-side hot zone, the user may also trigger smart transfer to obtain a cross-application data transmission service. In this case, the menu bar 114 that is shown in FIG. 1F and FIG. 3C and that includes one or more candidate application icons may be correspondingly displayed on a left side of the screen. In addition to the right-side hot zone and the left-side hot zone, the electronic device 100 may further set another hot zone. This is not limited in this embodiment of this application. Hot zones set to trigger smart transfer, such as the right-side hot zone and the left-side hot zone, are also referred to as smart transfer hot zones.

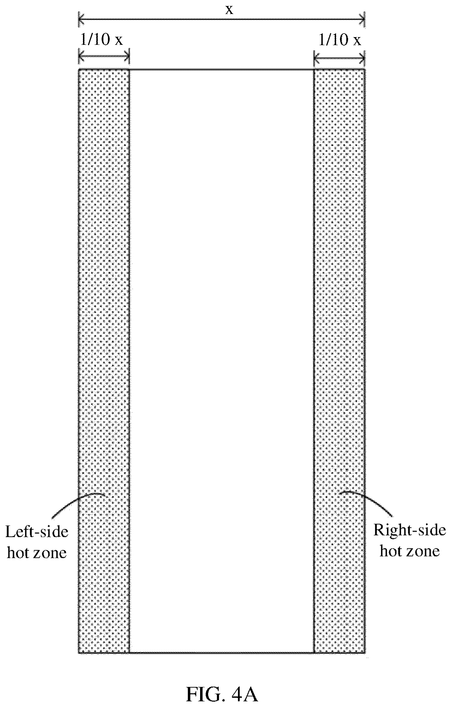

FIG. 4A-FIG. 4B are schematic diagrams of hot zones of the electronic device 100 according to an embodiment of this application.

A specific touch region preset on the screen is referred to as a hot zone. Referring to FIG. 4A, first, the hot zone of the electronic device 100 includes the right-side hot zone and/or the left-side hot zone. The right-side hot zone is a resulting rectangular touch region that extends from the right side of the screen to the other side. Correspondingly, the left-side hot zone is a resulting rectangular touch region that extends from the left side of the screen to the other side. For example, a width of the screen is x, and an extension length may be 1/10 of the width of the screen, that is, 1/10 x.

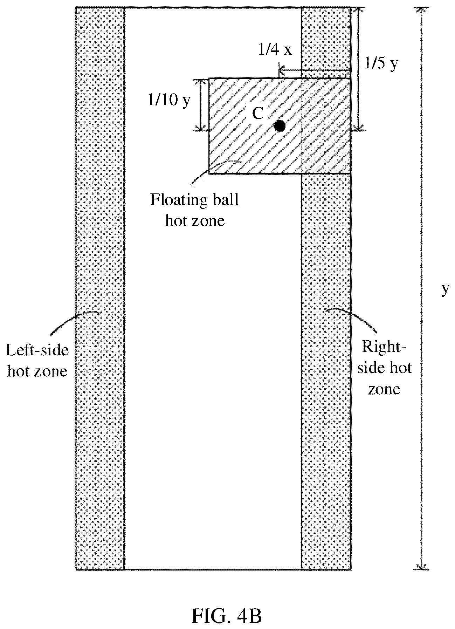

In a scenario in which a floating ball control is displayed, referring to FIG. 4B, the hot zone of the electronic device 100 further includes a floating ball hot zone. The floating ball hot zone is usually set in an upper right corner of the screen. In an embodiment, a right side of the floating ball hot zone overlaps the right side of the screen. For example, a distance between a center point C of the floating ball hot zone and an upper edge of the screen is 1/5 of a length of the screen, that is, 1/5 y; a distance between the center point C and an upper edge of the floating ball hot zone is 1/10 y; and a distance between the central point C and the right side of the screen is 1/4 of the width of the screen, that is, 1/4 x. Certainly, not limited to the upper right corner, the floating ball hot zone may alternatively be set at another position on the screen. This is not limited in this embodiment of this application.

In some embodiments, when a smart transfer hot zone overlaps the floating ball hot zone, the floating ball hot zone in an overlapping region is valid, but the smart transfer hot zone in the overlapping region is invalid.

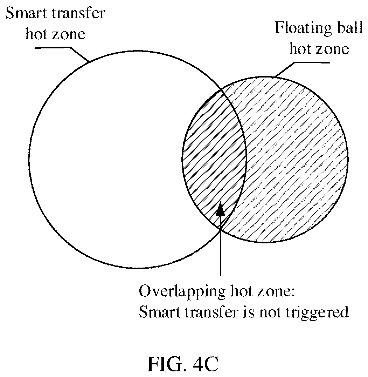

Referring to FIG. 4C, a region of a large circle represents the smart transfer hot zone (corresponding to a left-side hot zone and a right-side hot zone in FIG. 4B), and a region of a small circle represents the floating ball hot zone. In a case in which the smart transfer hot zone overlaps the floating ball hot zone, when a touch point between the user's finger and the screen resides in an overlapping hot zone, smart transfer is not triggered. Further, the electronic device 100 does not display a menu bar including one or more application icons. When detecting a user operation of release in the overlapping hot zone, the electronic device 100 may send corresponding data to an application corresponding to the floating ball.

In the foregoing embodiment, a smart transfer hot zone formed by the left-side hot zone and the right-side hot zone shown in FIG. 4A may be referred to as a first region, and the floating ball hot zone represented by a gray rectangle shown in FIG. 4B may be referred to as a second region. The smart transfer hot zone overlaps the floating ball hot zone, that is, the first region overlaps the second region. In this case, a region in the first region other than the overlapping region may be referred to as a third region.

In the methods shown in FIG. 2A-FIG. 2F and FIG. 3A-FIG. 3E, a user interface shown in FIG. 2A may be referred to as a first interface, the target text 211 selected by the user may be referred to as a first text, that is, first data, and the control 212 may be referred to as a first control. The first interface shown in FIG. 2A may further include one or more images. The user may select at least one image from the one or more images. The at least one image may be referred to as a first image, that is, first data. In this case, a draggable control generated based on the first image may be referred to as a first control.

Icons, of any two different applications, displayed in the menu bar may be referred to as an icon of a first application and an icon of a second application, and an application corresponding to the floating ball hot zone is a third application. Certainly, the first application and the third application may be the same or different. For example, both the first application and the third application are the Notes application, and the second application is the Favorites application. In this case, the floating ball 117 of the Notes application may be referred to as a first floating ball. For another example, the first application is the Messaging application, the second application is the Favorites application, and the third application is the Notes application. In this case, after sending to-be-shared data to the Messaging application, the floating ball of the Messaging application generated by the electronic device may be referred to as a second floating ball.

The control 118 may be referred to as a first identifier.

In some embodiments, in an application-based split-screen scenario, the electronic device 100 may also support smart transfer. In this case, the hot zone of the electronic device 100 further includes a split-screen application hot zone. After obtaining an operation control, if detecting an operation of dragging the operation control into the smart transfer hot zone and releasing the operation control, the electronic device 100 triggers smart transfer. If detecting an operation of dragging the operation control into the split-screen application hot zone and releasing the operation control, the electronic device 100 directly sends to-be-transmitted data corresponding to the operation control to an application corresponding to the split-screen application hot zone.

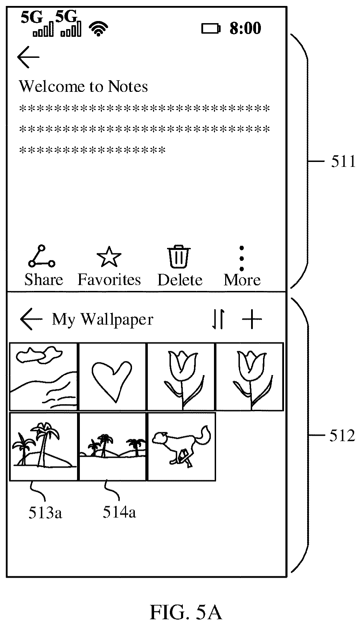

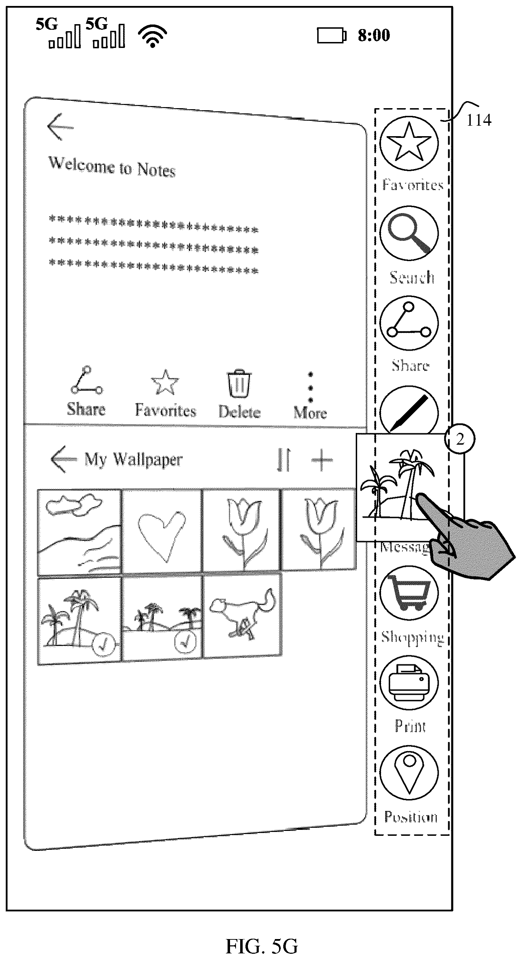

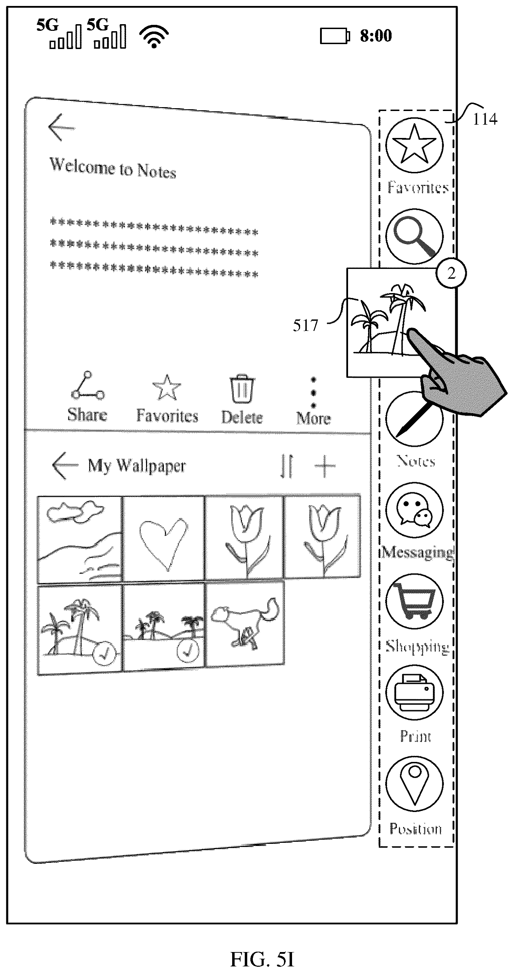

FIG. 5A-FIG. 5J are another group of user interfaces for implementing cross-application data transmission in an application-based split-screen scenario according to an embodiment of this application.

FIG. 5A is a user interface in the split-screen scenario according to this embodiment of this application. In the application-based split-screen scenario, the electronic device 100 may display interfaces of two or more applications at the same time.

Referring to FIG. 5A, the screen of the electronic device 100 may be divided into a region 511 and a region 512. For example, the region 511 may correspond to the Notes application, and is configured to display an interface of the Notes application. The region 512 may correspond to a Gallery application, and is configured to display an interface of the Gallery application. The user may edit a note on the interface of the Notes application shown in the region 511, and browse a picture on the interface of the Gallery application shown in the region 512.

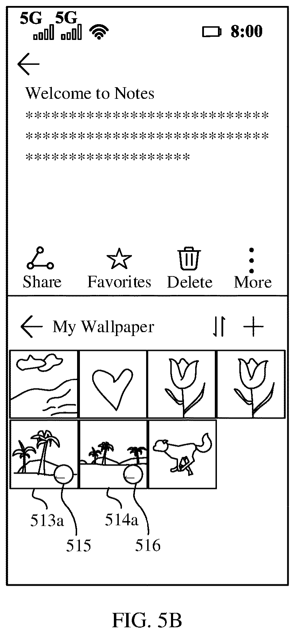

The interface of the Gallery application shown in the region 512 may display one or more icons, such as an icon 513a and an icon 514a. One icon corresponds to one picture. Referring to FIG. 5B, the electronic device 100 may detect a user operation performed on one or more icons, for example, a user operation of tapping the icon 513a and the icon 514a. In response to the foregoing operation, the electronic device 100 may select pictures corresponding to the icon 513a and the icon 514a. Optionally, the electronic device 100 may separately display, in the selected icons, controls configured to indicate "being selected", for example, a control 515 and a control 516.

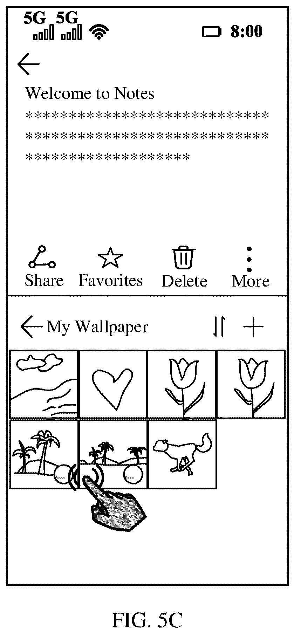

Referring to FIG. 5C-FIG. 5D, after one or more icons are selected, the electronic device 100 may detect a touch and hold operation performed on the screen. In response to the foregoing operation, the electronic device 100 may display a control 517 in a floating state. The control 517 may include an upper right corner mark, such as "2", to indicate a quantity of selected icons, that is, a quantity of selected pictures.

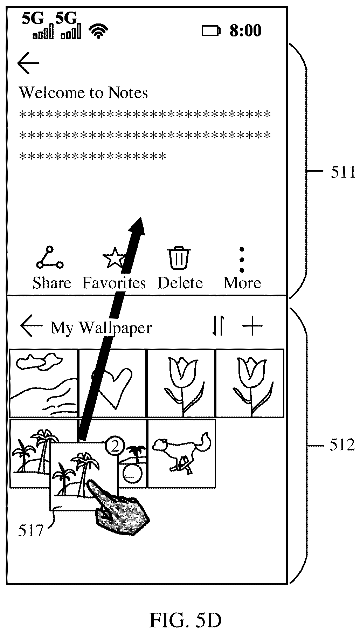

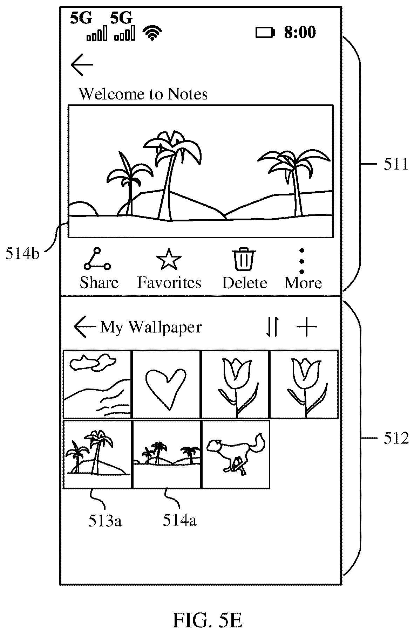

As shown in FIG. 5D, after displaying the control 517, the electronic device 100 may detect a user operation of dragging the control 517 into the region 511. After detecting a user operation of dragging the control 517 into the region 511 and an operation of releasing the control 517, the electronic device 100 may send a picture corresponding to the control 517 to the Notes application corresponding to the region 511. Then, the electronic device 100 may display, on the interface of the Notes application, the foregoing pictures corresponding to the icon 513a and the icon 514a. Referring to FIG. 5E, due to a size limitation of the region 511, only a picture 514b corresponding to the latter icon 514a is displayed in the region 511 on the current screen.

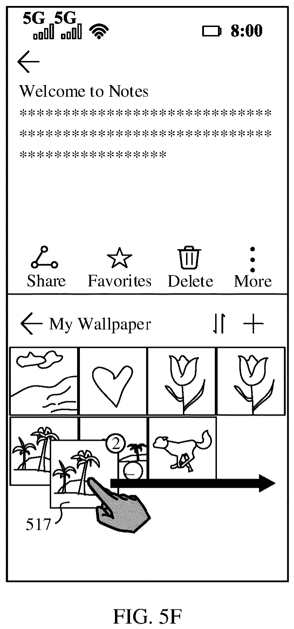

Referring to FIG. 5F-FIG. 5G, after displaying the control 517, the electronic device 100 may also detect an operation of dragging the control 517 to slide towards the right side of the screen. After detecting that the control 517 enters the right-side hot zone of the screen, the electronic device 100 may trigger smart transfer, and display the menu bar 114 including one or more candidate application icons. Then, after detecting an operation of continuing dragging, by the user, the control 517 to any candidate application icon (for example, the Messaging icon) and releasing the control 517, the electronic device 100 may send the picture corresponding to the control 517 to an application (the Messaging application) corresponding to the candidate application icon.

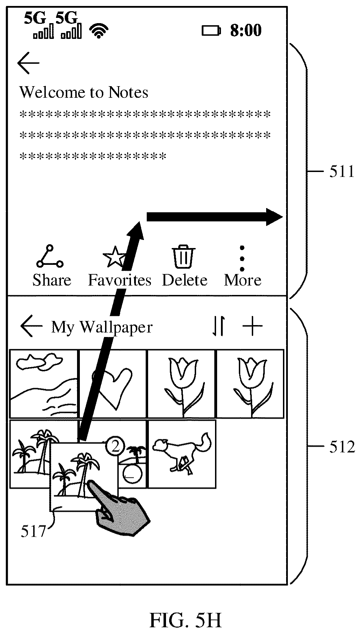

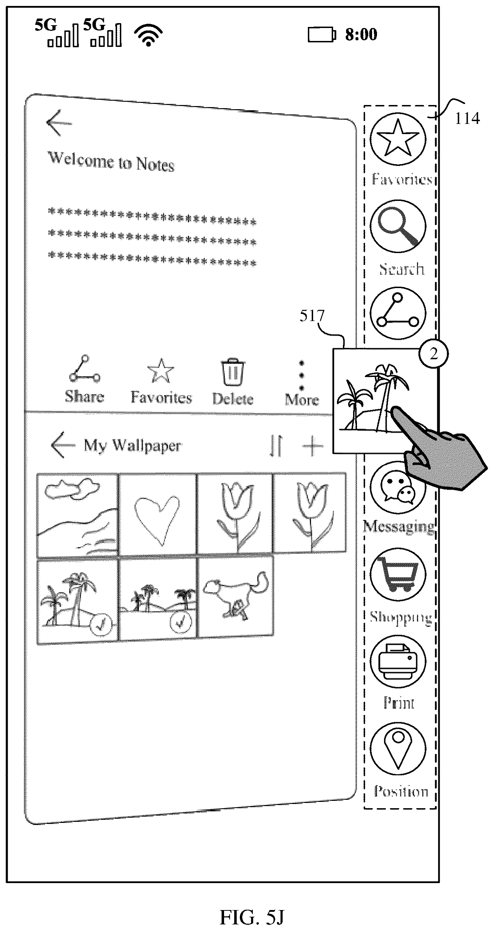

A trajectory along which the user drags the control 517 to move is complex. The electronic device 100 may determine, based on a final residence location of the user, to send the picture corresponding to the control 517 to the Notes application corresponding to the region 511, or determine to trigger smart transfer. For example, referring to FIG. 5H-FIG. 5I, the electronic device 100 may detect a user operation of dragging, by the user, the control 517 into the region 511 and then moving to the right side of the screen. The electronic device 100 may detect a user operation in which the user resides on the right side of the screen for a preset time. In this case, the electronic device 100 may determine to trigger smart transfer, and display the menu bar 114. Then, referring to FIG. 5J, the electronic device 100 may detect a user operation of continuing dragging, by the user, the control 517 to the Messaging icon and releasing the control 517, and the electronic device 100 may send the picture corresponding to the control 517 to the application corresponding to the Messaging icon.

It may be understood that the electronic device 100 may also detect an operation of selecting data such as a text from the region 511, dragging the data into the region 512, and releasing the data. In this case, in a scenario in which the application corresponding to the region 512 supports receiving the foregoing data, the electronic device 100 may send the foregoing data to the application corresponding to the region 512.

Similarly, in the application-based split-screen scenario, the electronic device 100 may also set a left-side hot zone. By using a method for dragging an operation control to slide leftward into the left-side hot zone, the user may also trigger smart transfer to obtain a cross-application data transmission service.

In the method shown in FIG. 5A-FIG. 5J, a window shown in the region 512 may be referred to as a first window, and a display window shown in the region 511 may be referred to as a second window. The Gallery application corresponding to the region 512 may be referred to as a fourth application, and the Notes application corresponding to the region 511 may be referred to as a third application. Pictures that are selected by the user in the first window and that correspond to the icon 513a and the icon 514a may be referred to as first images, that is, first data. The control 517 may be referred to as a first control. Icons, of any two applications, in the menu bar 114 may be referred to as an icon of a first application and an icon of a second application.

When the user selects to-be-transmitted data such as a text from the region 511 and drags the to-be-transmitted data into the region 512, a window shown in the region 511 may be referred to as a first window, and a display window shown in the region 512 may be referred to as a second window. The Notes application corresponding to the region 511 may be referred to as a fourth application, and the Gallery application corresponding to the region 512 may be referred to as a third application. The foregoing text is a first text, that is, first data.

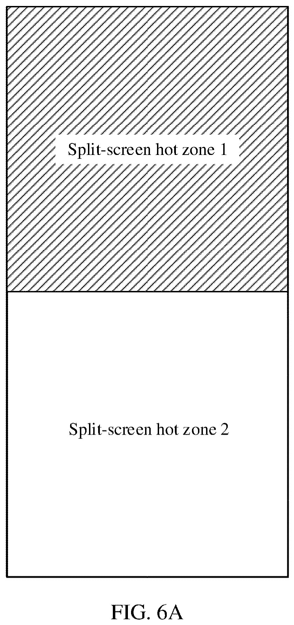

FIG. 6A-FIG. 6B are schematic diagrams of hot zones of the electronic device 100 in an application-based split-screen scenario according to an embodiment of this application.

Referring to FIG. 6A, the electronic device 100 may divide the screen into an upper-half pane and a lower-half pane by using a horizontal midline of the screen as a boundary. A touch region corresponding to the upper-half pane may be referred to as a split-screen hot zone 1. A touch region corresponding to the lower-half pane may be referred to as a split-screen hot zone 2. It may be understood that a horizontal boundary may not be the horizontal midline of the screen, in other words, a size of the split-screen hot zone 1 and that of the split-screen hot zone 2 may alternatively be different. This is not limited in this embodiment of this application.

For example, the split-screen hot zone 1 may correspond to the region 511 shown in FIG. 5A, and the split-screen hot zone 2 may correspond to the region 512 shown in FIG. 5A. After a user operation occurring in the split-screen hot zone 1 is detected, the Notes application corresponding to the split-screen hot zone 1 may process the foregoing operation. After a user operation occurring in the split-screen hot zone 2 is detected, the Gallery application corresponding to the split-screen hot zone 2 may process the foregoing operation.

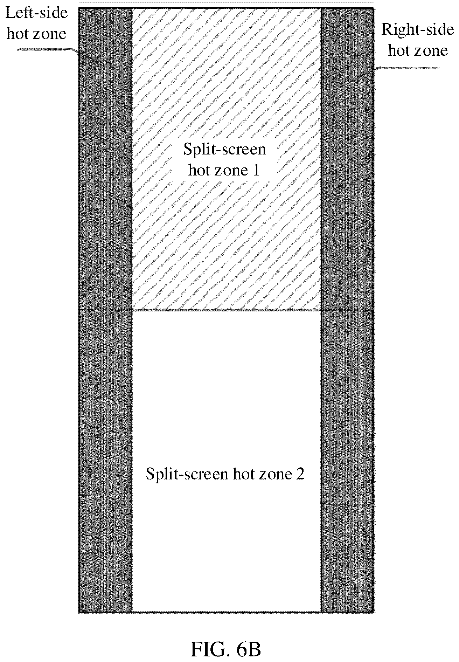

With reference to the smart transfer hot zone shown in FIG. 4A, a schematic diagram of an overall hot zone of the electronic device 100 in the application-based split-screen scenario may be shown in FIG. 6B. When a smart transfer hot zone overlaps a split-screen hot zone, the smart transfer hot zone in an overlapping region is valid, but the split-screen hot zone in the overlapping region is invalid.

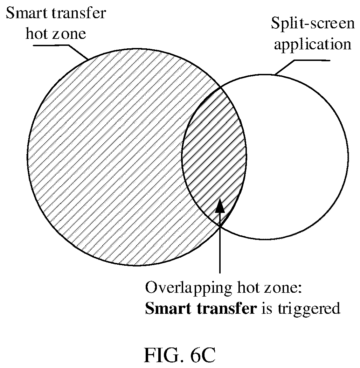

Referring to FIG. 6C, a region of a large circle represents the smart transfer hot zone (corresponding to a left-side hot zone and a right-side hot zone in FIG. 6B), and a region of a small circle represents the split-screen hot zone, which may specifically represent the split-screen hot zone 1 or the split-screen hot zone 2. In a case in which the smart transfer hot zone overlaps the split-screen hot zone, when a touch point between the user's finger and the screen resides in an overlapping hot zone, smart transfer is triggered. Further, the electronic device 100 displays a menu bar including one or more application icons. When detecting a user operation of release in any application icon, the electronic device 100 may send corresponding data to an application corresponding to the application icon.

In this case, a smart transfer hot zone formed by the left-side hot zone and the right-side hot zone shown in FIG. 6B is likewise a first region, and any split-screen hot zone (the split-screen hot zone 1 or 2) shown in FIG. 6A may be referred to as a second region. When data is dragged into the split-screen hot zone 2 from the split-screen hot zone 1, the split-screen hot zone 2 may be referred to as the second region. When data is dragged into the split-screen hot zone 1 from the split-screen hot zone 2, the split-screen hot zone 1 may be referred to as the second region. The smart transfer hot zone overlaps any split-screen hot zone, that is, the first region overlaps the second region. In this case, a region in the second region other than the overlapping region may be referred to as a fourth region.

The application-based split-screen scenario shown in FIG. 5A-FIG. 5F may be referred to as vertical screen splitting (the Notes application and the Gallery application are vertically arranged). In some embodiments, the electronic device 100 is a mobile phone with a foldable screen. In this case, the electronic device 100 generally uses horizontal screen splitting.

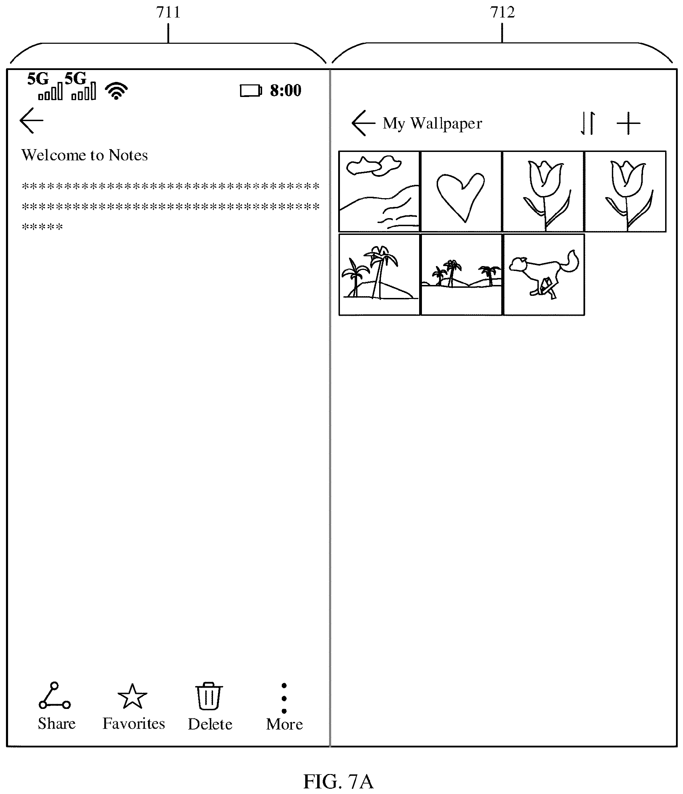

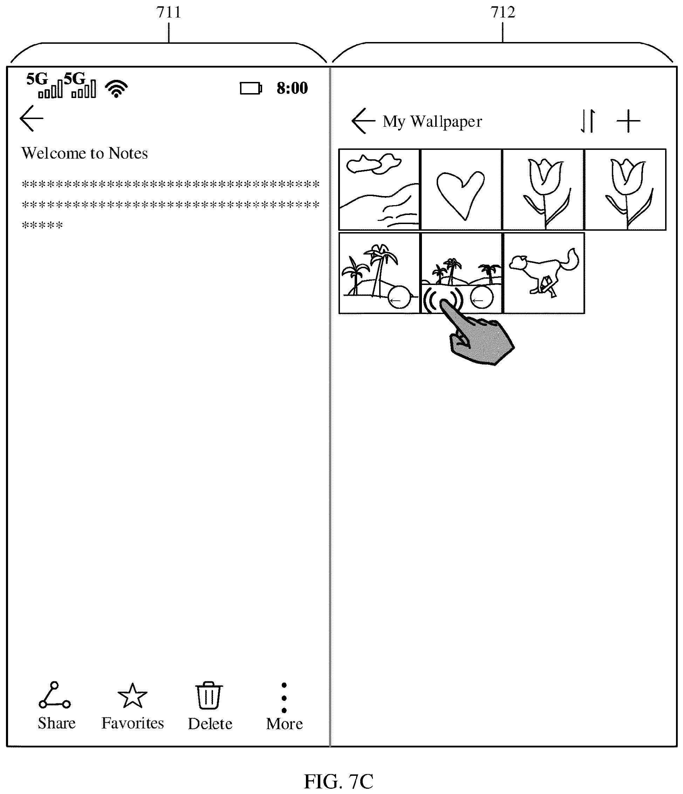

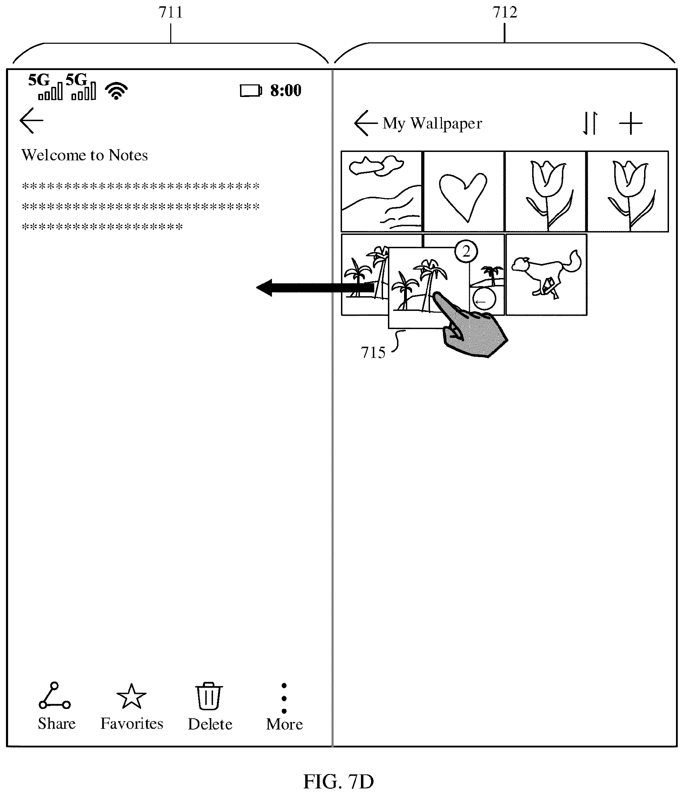

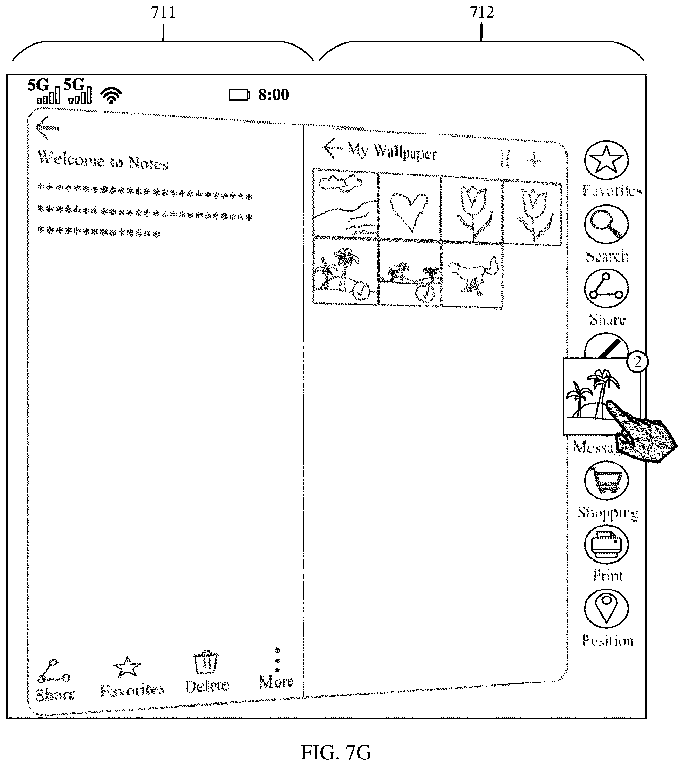

FIG. 7A-FIG. 7G are another group of user interfaces for implementing cross-application data transmission in a horizontal split-screen scenario according to an embodiment of this application.

FIG. 7A is a user interface in the horizontal split-screen scenario according to this embodiment of this application. Referring to FIG. 7A, the screen of the electronic device 100 may be divided into a region 711 and a region 712. For example, the region 711 may correspond to the Notes application, and is configured to display an interface of the Notes application. The region 712 may correspond to the Gallery application, and is configured to display an interface of the Gallery application. The user may edit a note on the interface of the Notes application shown in the region 711, and browse a picture on the interface of the Gallery application shown in the region 712.

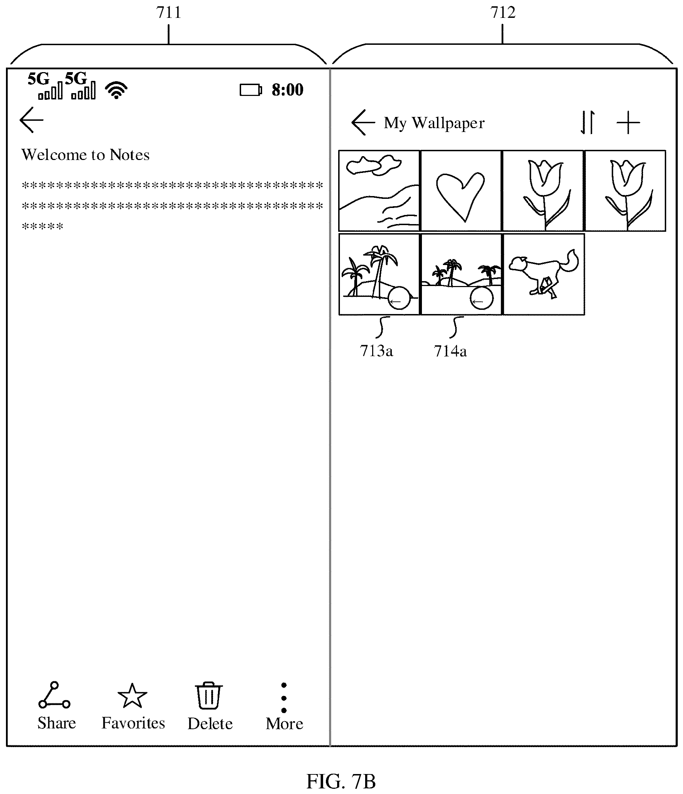

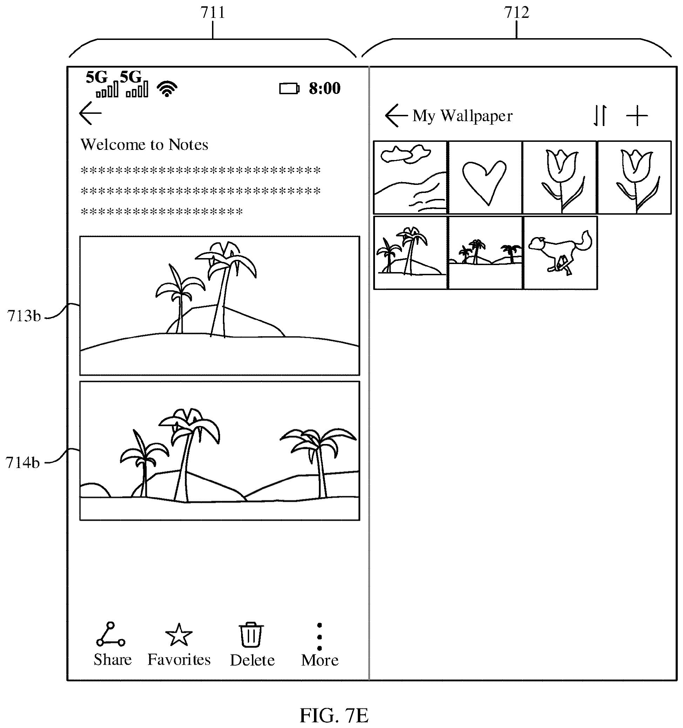

As shown in FIG. 7B-FIG. 7D, the electronic device 100 may determine one or more icons (such as an icon 713a and an icon 714a), and then generate and display a corresponding operation control in a floating state, such as a control 715. Then, the electronic device 100 may detect a user operation of dragging the control 715 into the region 711. After detecting an operation of dragging the control 715 into the region 711 and releasing the control 715, the electronic device 100 may send a picture corresponding to the control 715 (that is, pictures corresponding to the icon 713a and the icon 714a) to the Notes application corresponding to the region 711. Referring to FIG. 7E, the electronic device 100 may display, on the interface of the Notes application, the foregoing pictures corresponding to the icon 713a and the icon 714a, for example, a picture 713b and a picture 714b, for edit and use by the user.

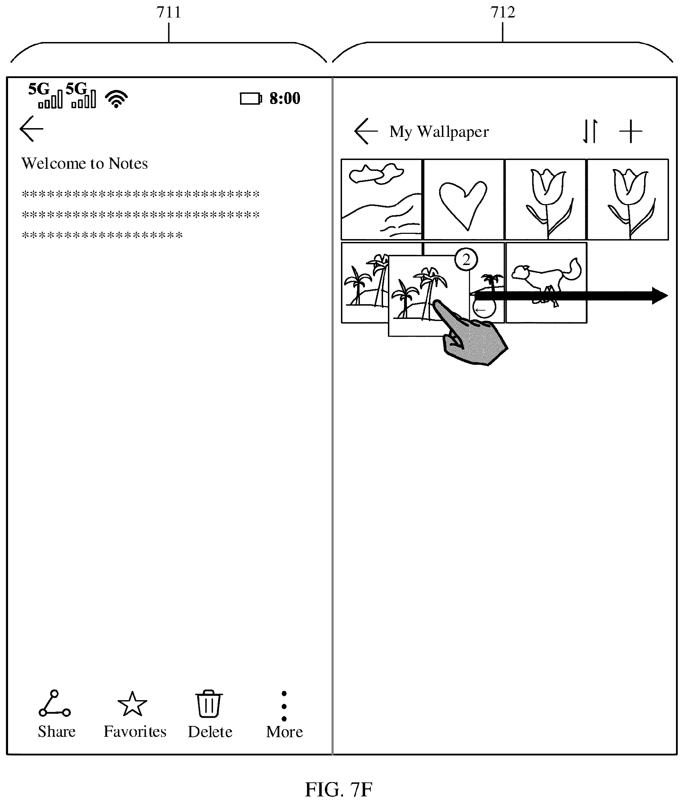

Referring to FIG. 7F-FIG. 7G, after displaying the control 715, the electronic device 100 may also detect an operation of dragging the control 715 to slide towards the right side of the screen. After detecting that the control 715 enters a right-side hot zone of the screen, the electronic device 100 may trigger smart transfer, and send, by using the smart transfer, the picture corresponding to the control 715 to a target application selected by the user.

Similarly, in a horizontal application-based split-screen scenario, the electronic device 100 may also set a left-side hot zone. By using a method for dragging an operation control to slide leftward into the left-side hot zone, the user may also trigger smart transfer to obtain a cross-application data transmission service.

In the method shown in FIG. 7A-FIG. 7G, a window shown in the region 712 may be referred to as a first window, and a display window shown in the region 711 may be referred to as a second window. The Gallery application corresponding to the region 712 may be referred to as a fourth application, and the Notes application corresponding to the region 711 may be referred to as a third application. Pictures that are selected by the user in the first window and that correspond to the icon 713a and the icon 714a may be referred to as first data. The control 715 may be referred to as a first control.

When the user selects to-be-transmitted data such as a text from the region 711 and drags the to-be-transmitted data into the region 712, a window shown in the region 711 may be referred to as a first window, and a display window shown in the region 712 may be referred to as a second window. The Notes application corresponding to the region 711 may be referred to as a fourth application, and the Gallery application corresponding to the region 712 may be referred to as a third application. The foregoing text is a first text, that is, first data.

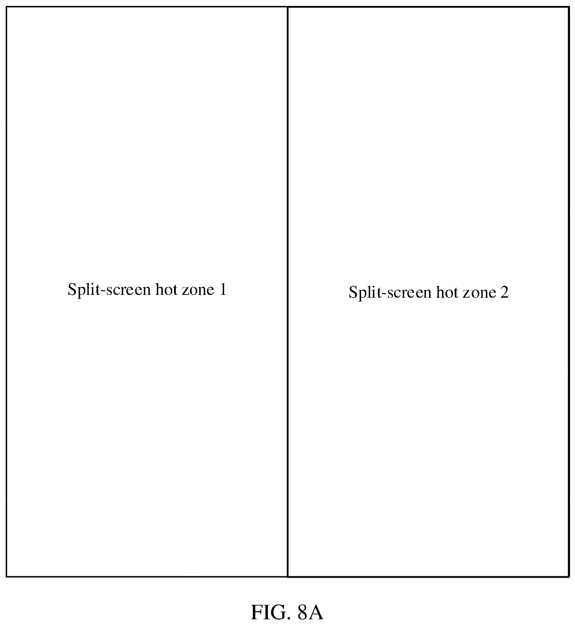

FIG. 8A-FIG. 8B are schematic diagrams of hot zones of the electronic device 100 in a horizontal split-screen scenario according to an embodiment of this application.

Referring to FIG. 8A, the electronic device 100 may divide the screen into a left-half pane and a right-half pane by using a vertical midline of the screen as a boundary. A touch region corresponding to the left-half pane may be referred to as a split-screen hot zone 1. A touch region corresponding to the right-half pane may be referred to as a split-screen hot zone 2. It may be understood that a vertical boundary may not be the vertical midline of the screen, in other words, a size of the split-screen hot zone 1 and that of the split-screen hot zone 2 may alternatively be different. This is not limited in this embodiment of this application.

For example, the split-screen hot zone 1 may correspond to the region 711 shown in FIG. 7A, and the split-screen hot zone 2 may correspond to the region 712 shown in FIG. 7A. After a user operation occurring in the split-screen hot zone 1 is detected, the Notes application corresponding to the split-screen hot zone 1 may process the foregoing operation. After a user operation occurring in the split-screen hot zone 2 is detected, the Gallery application corresponding to the split-screen hot zone 2 may process the foregoing operation.

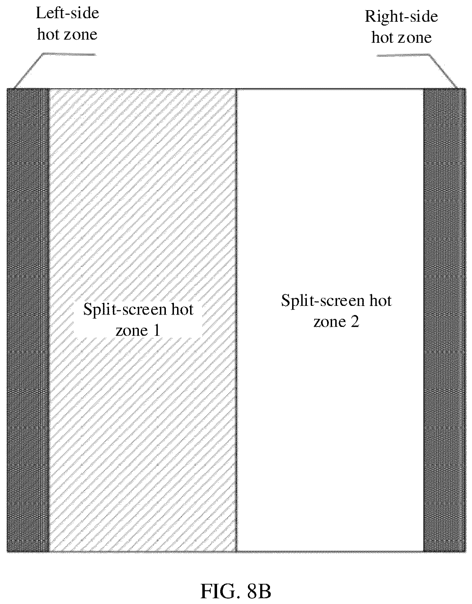

With reference to the smart transfer hot zone shown in FIG. 4A, a schematic diagram of an overall hot zone of the electronic device 100 in the horizontal split-screen scenario may be shown in FIG. 8B. When a smart transfer hot zone overlaps a split-screen hot zone, the smart transfer hot zone in an overlapping region is valid, but the split-screen hot zone in the overlapping region is invalid. That is, in a case in which the smart transfer hot zone overlaps the split-screen hot zone, when a touch point between the user's finger and the screen resides in an overlapping hot zone, smart transfer is triggered. Further, the electronic device 100 displays a menu bar including one or more application icons.

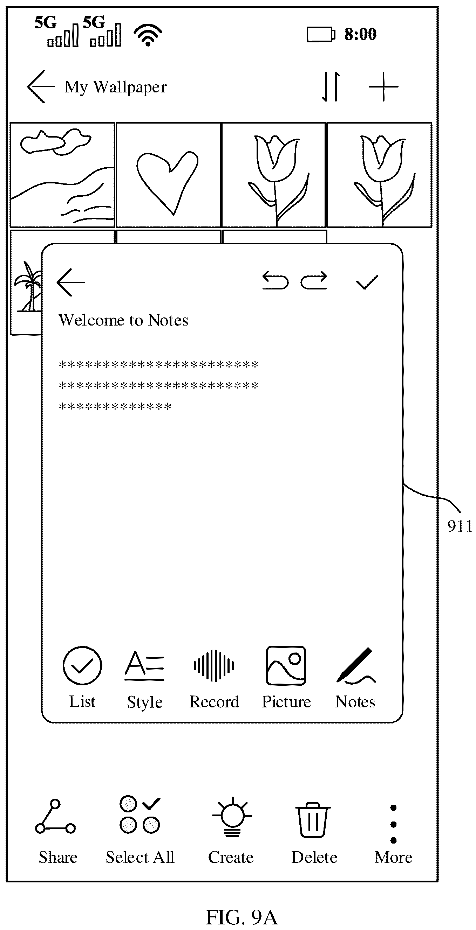

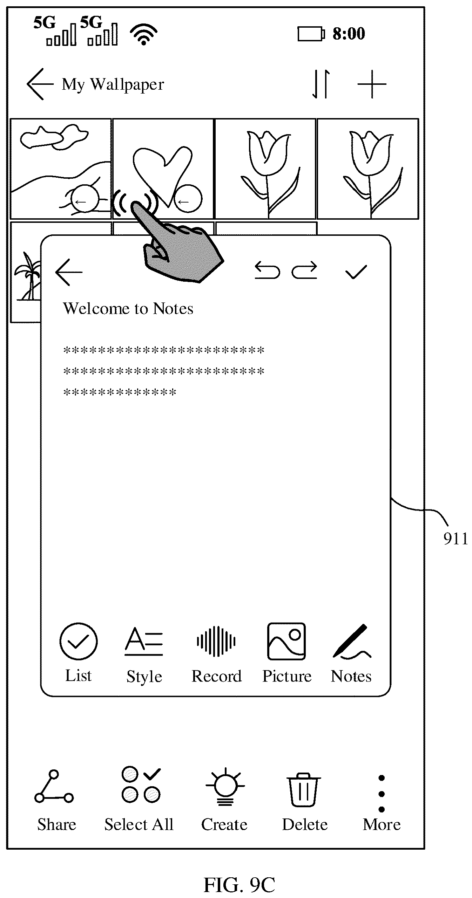

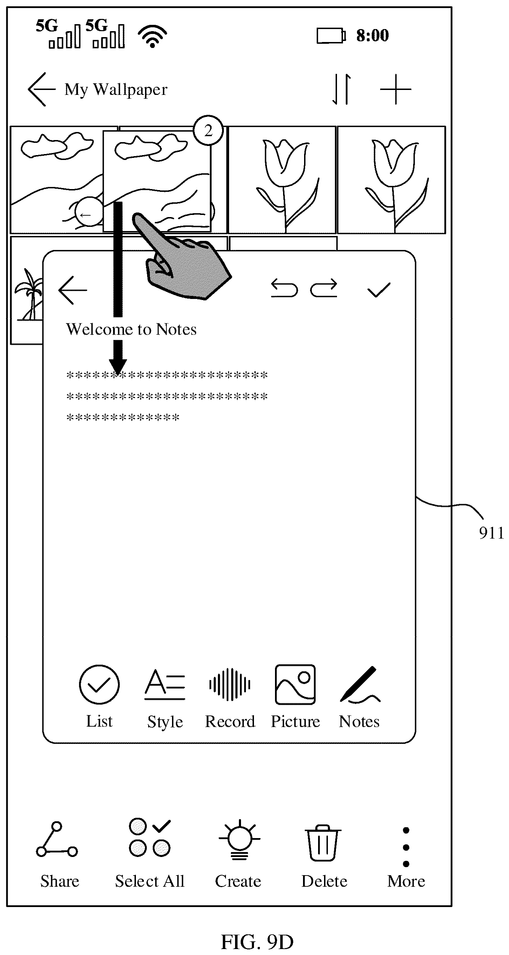

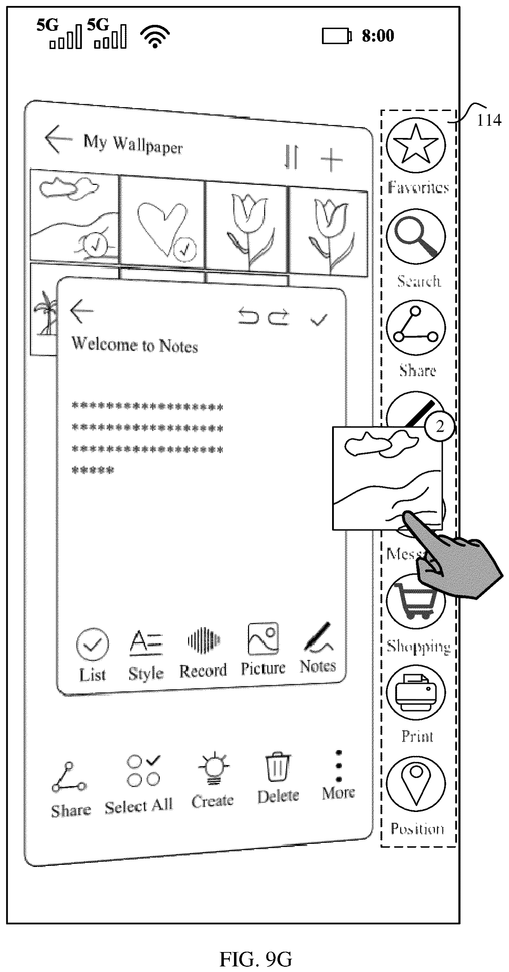

In some implementations, application-based screen splitting may be performed in a form of a floating window. FIG. 9A-FIG. 9G are another group of user interfaces for implementing cross-application data transmission in a floating window-based split-screen scenario according to an embodiment of this application.

Referring to FIG. 9A, the electronic device 100 may display an interface of the Gallery application. The electronic device 100 may display a floating window 911 over a layer of the interface of the Gallery application. The floating window 911 may display an interface of the Notes application. The electronic device 100 may support the user in adjusting a position of the floating ball 911 on the screen at any time as required.

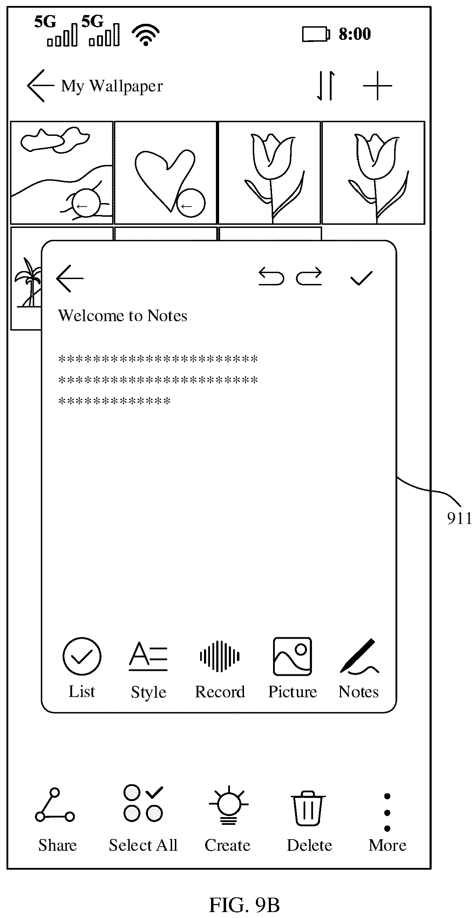

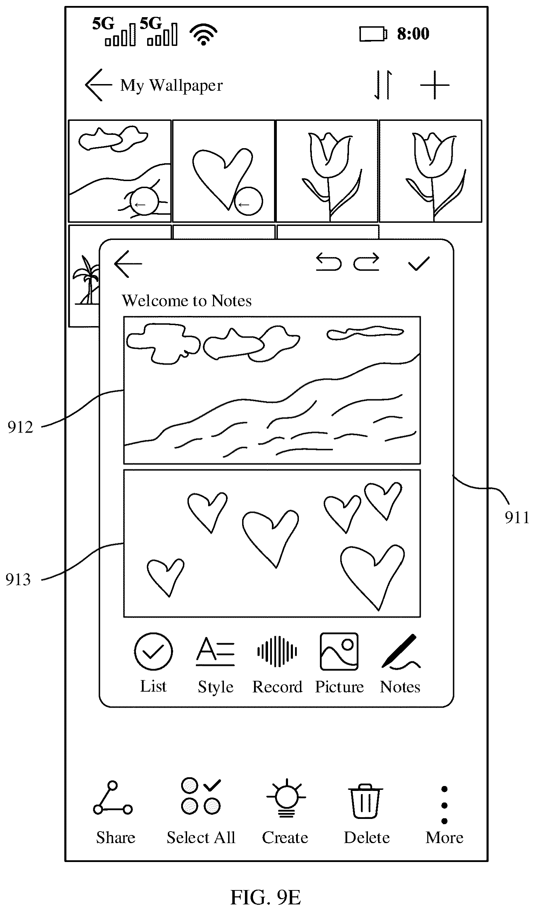

Referring to FIG. 9B-FIG. 9D, the electronic device 100 may determine one or more icons selected by the user, and then generate and display a corresponding operation control in a floating state. Then, the electronic device 100 may detect an operation of dragging the operation control into the floating window 911 and releasing the operation control. In response to the foregoing operation, the electronic device 100 may send a picture corresponding to the operation control to the Notes application corresponding to the floating window 911. Referring to FIG. 9E, the electronic device 100 may display, on an interface of the Notes application, a picture 912 and a picture 913 that correspond to the foregoing operation control.

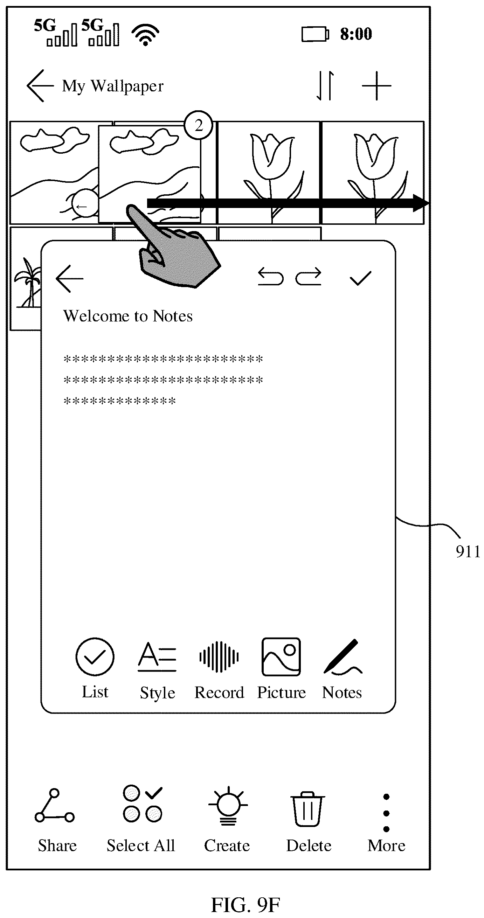

Referring to FIG. 9F-FIG. 9G, in a floating window-based split-screen scenario, after displaying an operation control, the electronic device 100 may also detect an operation of dragging the operation control to slide towards the right side of the screen to trigger smart transfer. Then, the electronic device 100 may send, by using the smart transfer, a picture corresponding to the operation control to a target application selected by the user.

It may be understood that in a split-screen scenario in a form of a floating window, the electronic device 100 may also determine to-be-transmitted data from an application corresponding to the floating window, and display a corresponding operation control. After detecting an operation of dragging, by the user, the foregoing operation control to another application hot zone and releasing the operation control, the electronic device 100 may also determine the to-be-transmitted data from the application corresponding to the floating window, and send the to-be-transmitted data to another application outside the floating window.

In the method shown in FIG. 9A-FIG. 9G, a display window shown in the floating window 911 may be referred to as a second window. The Notes application corresponding to the floating window 911 may be referred to as a third application. Similarly, when the user selects to-be-transmitted data from the floating window 911, for example, a text, a window shown in the floating window 911 may be referred to as a first window, and the Notes application corresponding to the floating window 911 may be referred to as a fourth application.

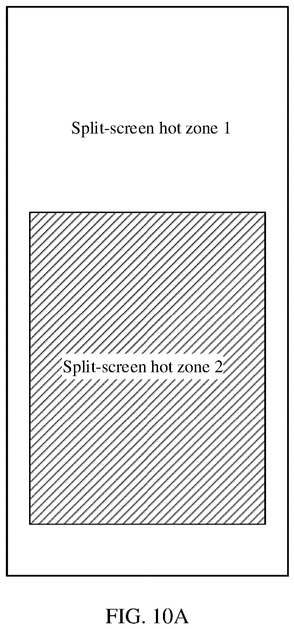

FIG. 10A-FIG. 10B are schematic diagrams of hot zones of the electronic device 100 in a floating window-based split-screen scenario according to an embodiment of this application.

Referring to FIG. 10A, the electronic device 100 may include a split-screen hot zone 2. Another touch region outside the split-screen hot zone 2 may be referred to as a split-screen hot zone 1. For example, the split-screen hot zone 2 may correspond to the floating window 911. The split-screen hot zone 2 may further change with a position and/or a size of the floating window 911 on the screen. After a user operation occurring in the split-screen hot zone 1 is detected, the Gallery application corresponding to the split-screen hot zone 1 may process the foregoing operation. After a user operation occurring in the split-screen hot zone 2 is detected, the Notes application corresponding to the split-screen hot zone 2 may process the foregoing operation.

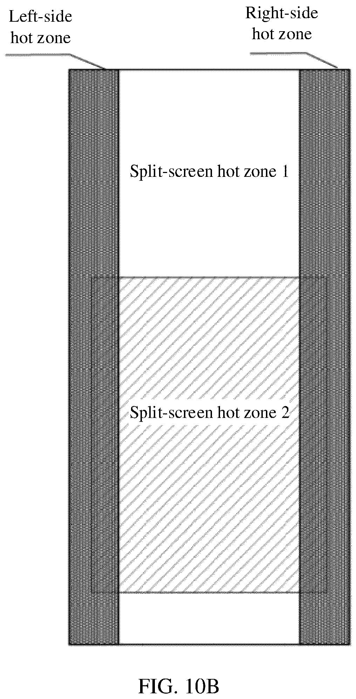

With reference to the smart transfer hot zone shown in FIG. 4A, a schematic diagram of an overall hot zone of the electronic device 100 in the horizontal split-screen scenario may be shown in FIG. 10B. Similarly, when a smart transfer hot zone overlaps a split-screen hot zone, the smart transfer hot zone in an overlapping region is valid, but the split-screen hot zone in the overlapping region is invalid. That is, in a case in which the smart transfer hot zone overlaps the split-screen hot zone, when a touch point between the user's finger and the screen resides in an overlapping hot zone (including: dragging from the split-screen hot zone 1 into an overlapping hot zone between the split-screen hot zone 2 and the smart transfer hot zone, and dragging from the split-screen hot zone 2 into an overlapping hot zone between the split-screen hot zone 1 and the smart transfer hot zone), smart transfer is triggered. Further, the electronic device 100 displays a menu bar including one or more application icons.

In some embodiments, in the scenario shown in FIG. 10A, when a smart transfer hot zone overlaps a split-screen hot zone, the smart transfer hot zone in an overlapping region is invalid, but the split-screen hot zone in the overlapping region is valid. That is, in a case in which the smart transfer hot zone overlaps the split-screen hot zone, when a touch point between the user's finger and the screen resides in an overlapping hot zone, smart transfer is not triggered. When detecting for the second time that the touch point between the finger and the screen resides in the overlapping hot zone, the electronic device 100 triggers smart transfer again.

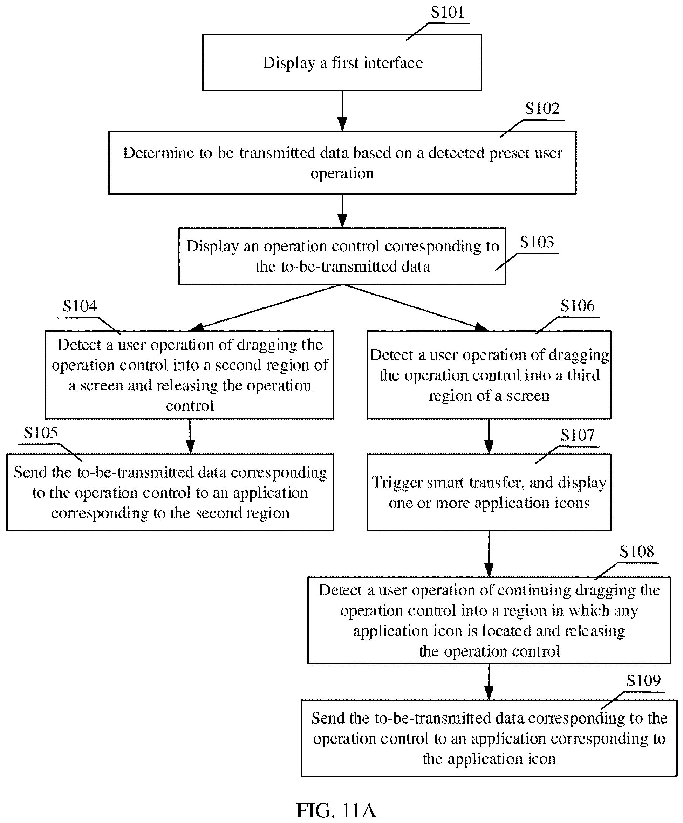

FIG. 11A is a flowchart of cross-application data transmission according to an embodiment of this application.

S101: An electronic device 100 displays a first interface.

S102: The electronic device 100 determines to-be-transmitted data based on a detected preset user operation.

S103: The electronic device 100 displays an operation control corresponding to the to-be-transmitted data.

S104: The electronic device 100 detects a user operation of dragging the operation control into a second region of a screen and releasing the operation control.

S105: The electronic device 100 sends the to-be-transmitted data corresponding to the operation control to an application corresponding to the second region.

S106: The electronic device 100 detects a user operation of dragging the operation control into a third region of the screen.

S107: Trigger smart transfer. The electronic device 100 displays one or more application icons.

S108: The electronic device 100 detects a user operation of continuing dragging the operation control into a region in which any application icon is located and releasing the operation control.

S109: The electronic device 100 sends the to-be-transmitted data corresponding to the operation control to an application corresponding to the application icon.

The first interface is any user interface of any application provided by a first application. The application may be a system application, or may be a three-party application. For example, any browsing page provided by a browser application shown in FIG. 2A may be referred to as a first interface. In some embodiments, the first interface may alternatively be a user interface such as a homepage (homepage), a leftmost home screen, or a lock screen interface of the electronic device 100.

In a process of displaying the first interface, the electronic device 100 may detect a preset specific user operation. Then, the electronic device 100 may determine, based on the preset user operation, to-be-transmitted data possibly available for smart transfer. In addition, the electronic device 100 may display, on the screen, an operation control corresponding to the to-be-transmitted data, so that the electronic device 100 detects, by using the operation control, whether a user intends to perform cross-application data transmission.

For example, in the embodiments shown in FIG. 2A-FIG. 2F and FIG. 3A-FIG. 3E, the user selects the target text 211, and a touch and hold operation performed on the target text 211 may also be referred to as a preset specific user operation. In this case, the target text 211 is to-be-transmitted data, and the control 212 may be referred to as an operation control corresponding to the target text 211.

The floating ball hot zone represented by the gray rectangle shown in FIG. 4B may be referred to as a second region. Corresponding to the user interfaces shown in FIG. 2A-FIG. 2F and FIG. 3A-FIG. 3E, the region in which the floating ball 117 is located may be referred to as a second region. A smart transfer hot zone formed by a left-side hot zone and a right-side hot zone may be referred to as a first region, and a region, in the first region, that does not overlap the second region may be referred to as a third region.

After detecting an operation of dragging an operation control into the second region and releasing the operation control, the electronic device 100 may send to-be-transmitted data corresponding to the operation control to an application corresponding to the second region. After detecting an operation of dragging an operation control into the third region, the electronic device 100 may display one or more application icons; and after detecting an operation of continuing dragging the operation control into a region in which any application icon is located and releasing the operation control, the electronic device 100 may send to-be-transmitted data corresponding to the operation control to an application corresponding to the application icon.

For example, after detecting an operation of dragging the control 212 into the region in which the floating ball 117 is located (that is, the second region) and releasing the control 212, the electronic device 100 may send the target text 211 corresponding to the control 212 to the Notes application corresponding to the floating ball 117; and after detecting that the control 212 is dragged into a region (that is, the third region), in the smart transfer hot zone (including the right-side hot zone and the left-side hot zone), that does not overlap the region in which the floating ball 117 is located, the electronic device 100 may display the menu bar 114 including one or more application icons. After detecting a user operation of dragging the control 212 to the Notes icon and releasing the control 212, the electronic device 100 may send the target text 211 corresponding to the control 212 to the Notes application corresponding to the Notes icon.

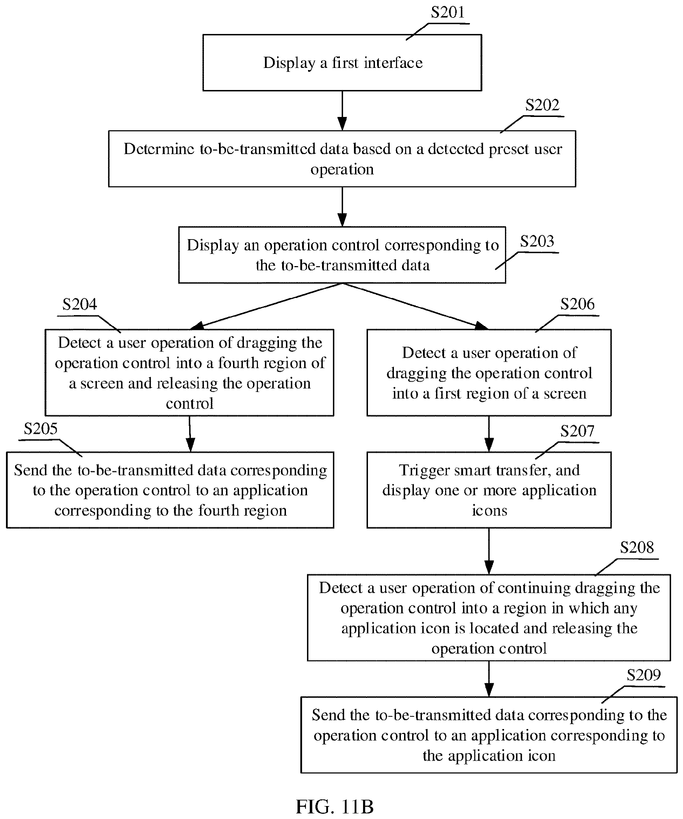

FIG. 11B is a flowchart of another type of cross-application data transmission according to an embodiment of this application.

S201: An electronic device 100 displays a first interface.

S202: The electronic device 100 determines to-be-transmitted data based on a detected preset user operation.

S203: The electronic device 100 displays an operation control corresponding to the to-be-transmitted data.

S204: The electronic device 100 detects a user operation of dragging the operation control into a fourth region of a screen and releasing the operation control.

S205: The electronic device 100 sends the to-be-transmitted data corresponding to the operation control to an application corresponding to the fourth region.

S206: The electronic device 100 detects a user operation of dragging the operation control into a first region of the screen.

S207: Trigger smart transfer. The electronic device 100 displays one or more application icons.

S208: The electronic device 100 detects a user operation of continuing dragging the operation control into a region in which any application icon is located and releasing the operation control.

S209: The electronic device 100 sends the to-be-transmitted data corresponding to the operation control to an application corresponding to the application icon.

In some embodiments, the electronic device 100 further supports an application-based screen splitting function. In an application-based split-screen scenario, the electronic device 100 may display two or more windows of applications at the same time. The user may select to-be-transmitted data from data displayed in any one window and drag the to-be-transmitted data into another window. In this case, a display region corresponding to the dragged-in window may be referred to as a second region. Alternatively, after selecting to-be-transmitted data from data displayed in any one window, the user may drag the to-be-transmitted data towards a left-side hot zone or a right-side hot zone to trigger smart transfer. A smart transfer hot zone formed by the left-side hot zone and the right-side hot zone may be referred to as a first region.

For example, in the embodiment shown in FIG. 5A-FIG. 5G, the interface shown in FIG. 5A may be referred to as a first interface. In this case, an operation of selecting the icon 513a and the icon 514a and a touch and hold operation performed on the one or more icons may be referred to as reset specific user operations. In this case, a picture corresponding to the one or more icons is to-be-transmitted data, and the control 517 may be referred to as an operation control corresponding to the to-be-transmitted data.

The region 511, that is, the split-screen hot zone 1, may be referred to as a second region. A region, in the split-screen hot zone 1, that does not overlap the smart transfer hot zone may be referred to as a fourth region. Therefore, after detecting an operation of dragging the control 517 into a region (that is, the fourth region), in the region 511, that does not overlap the smart transfer hot zone and releasing the control 517, the electronic device 100 may send the picture corresponding to the control 517 to the Notes application corresponding to the region 511. After detecting an operation of dragging the control 517 into the smart transfer hot zone (that is, the first region), the electronic device 100 may display the menu bar 114 including one or more application icons. After detecting a user operation of dragging the control 517 to the Messaging icon and releasing the control 517, the electronic device 100 may send the picture corresponding to the control 517 to the Messaging application corresponding to the Messaging icon.

In the embodiment shown in FIG. 7A-FIG. 7G, the interface shown in FIG. 7A may be referred to as a first interface. In this case, pictures corresponding to the icon 713a and the icon 714a are to-be-transmitted data, and the control 715 may be referred to as an operation control corresponding to the to-be-transmitted data. Similarly, in the embodiment shown in FIG. 9A-FIG. 9G, a picture corresponding to one or more icons selected by the user is to-be-transmitted data, and a control in a floating state generated by the electronic device 100 based on the one or more icons may be referred to as an operation control corresponding to the one or more icons. After detecting an operation of dragging the control 715 into a region (that is, the fourth region), in the region 711, that does not overlap the smart transfer hot zone and releasing the control 715, the electronic device 100 may send the picture corresponding to the control 715 to the Notes application corresponding to the region 711. After detecting an operation of dragging the control 715 into the smart transfer hot zone (that is, the first region), the electronic device 100 may display a menu bar including one or more application icons. After detecting a user operation of dragging the control 715 to the Messaging icon and releasing the control 715, the electronic device 100 may send the picture corresponding to the control 517 to the Messaging application corresponding to the Messaging icon.

For the embodiment shown in FIG. 9A-FIG. 9G, refer to the embodiments shown in FIG. 5A-FIG. 5G and FIG. 7A-FIG. 7G. Details are not described herein again.

Not limited to the target text 211 in the embodiment shown in FIG. 2A-FIG. 2E or the picture in the embodiments shown in FIG. 5A-FIG. 5G, FIG. 7A-FIG. 7G, and FIG. 9A-FIG. 9G, the to-be-transmitted data may alternatively be data such as a document, a video, or a hyperlink.

For example, after selecting one or more documents from a file directory or receiving one or more documents sent by a contact, the electronic device 100 may determine that the one or more documents are to-be-transmitted data, and generate a corresponding operation control. After selecting one or more videos from the Gallery application or obtaining one video through screen recording, the electronic device 100 may determine that the one or more selected videos or the video obtained by screen recording is to-be-transmitted data, and generate a corresponding operation control. This is not limited in this embodiment of this application.

In some embodiments, the first region and the second region may alternatively not overlap. In this case, after detecting an operation of dragging an operation control into the first region and releasing the operation control, the electronic device 100 may send to-be-transmitted data corresponding to the operation control to an application corresponding to the first region. After detecting an operation of dragging an operation control into the second region, the electronic device 100 may display one or more application icons; and after detecting an operation of continuing dragging the operation control into a region in which any application icon is located and releasing the operation control, the electronic device 100 may send to-be-transmitted data corresponding to the operation control to a third application corresponding to the application icon.

Referring to the foregoing description, after triggering smart transfer and before displaying one or more candidate application icons, the electronic device 100 may first determine, based on an information type and semantic information of the to-be-transmitted data, a candidate application capable of receiving the to-be-transmitted data. The following specifically describes a policy for determining, by the electronic device 100, a candidate application based on an information type and semantic information of to-be-transmitted data.

Table 1 is a table of match relationships between types of to-be-transmitted data and candidate applications according to an embodiment of this application. After triggering smart transfer, the electronic device 100 may first determine, according to the match relationships described in Table 1, a candidate application capable of receiving current to-be-transmitted data.

**Table 1**

| Information type | Semantic information | Personalized application | Global application |
|---|---|---|---|
| Text | Address information | Navigation and taxi hailing | Favorites Search Share Notes Instant messaging Email |
| | Movie/Performance information | Ticket purchasing | |
| | Product name/Shopping token information | Shopping | |
| | Food name | Catering and food delivery | |
| | Schedule information | Calendar | |
| Picture | \ | Picture editing | |
| | Address information | Navigation and taxi hailing | |
| | Movie/Performance information | Ticket purchasing | |
| | Product name/Shopping token information | Shopping | |
| | Food name | Catering and food delivery | |
| | Application ID | Specified application | |
| Video | \ | Video editing Short video social media | |
| Document | \ | Printer Schedule | |
| Hyperlink | \ | Browser | |

First, candidate applications may include a global application and a personalized application. A global application is capable of receiving to-be-transmitted data of any type, and a personalized application is configured to receive only to-be-transmitted data of a specific type and with specific semantic information. That is, after any type of to-be-transmitted data triggers smart transfer, corresponding candidate applications include all global applications and a personalized application that matches an information type and semantic information of the to-be-transmitted data.

As shown in Table 1, when to-be-transmitted data, namely, data corresponding to an operation control is a text, and the text includes address information, candidate applications displayed in the menu bar 114 for smart transfer include all global applications: the Favorites application, a Search application, a Share application, the Notes application, the instant messaging application, and the Email application, and matched personalized applications: a navigation application and a taxi hailing application.

When the to-be-transmitted data is a text, and the text includes movie/performance information (for example, "*** vocal concert", "*** music concert", or "movie ***"), candidate applications displayed in the menu bar 114 for smart transfer include all global applications and a matched personalized application: a ticket purchase application. When the text includes product name/shopping token information (for example, "** loudspeaker box" or "** skirt"), a matched personalized application includes a shopping application. When the text includes a food name (for example "roast meat" or "hot pot"), matched personalized applications include a catering application and a food delivery application. When the text includes schedule information (for example, "2023.01.01 9:30 morning meeting"), a matched personalized application includes a calendar application.

When the to-be-transmitted data is a picture, a default personalized application includes a picture editing application. Further, through image recognition, when it is identified that the to-be-transmitted picture includes address information, the personalized application may further include a navigation application and a taxi hailing application; when it is identified that the to-be-transmitted picture includes movie/performance information, the personalized application may further include a ticket purchase application; when it is identified that the to-be-transmitted picture includes product name/shopping token information, the personalized application may further include a shopping application; and when it is identified that the to-be-transmitted picture includes a food name, the personalized application may further include a catering application and a food delivery application.

In particular, when an image is a screenshot image, the screenshot image may further carry an application identity identifier, that is, an application ID (indicating a specific application from which the screenshot image is captured). During matching of a personalized application, the electronic device 100 may further determine a corresponding application based on the foregoing application ID, and determine that the application is a candidate application, so that the user quickly accesses the application corresponding to the screenshot image. For example, after receiving a screenshot image that is sent by a contact and that carries an application ID, the electronic device 100 may determine that a candidate application includes an application corresponding to the application ID, for example, a short video application. In this way, the user can quickly access the application, so as to quickly browse a video corresponding to the screenshot image.

When the to-be-transmitted data is a video, personalized applications may include a video editing application and a short video social application. When the to-be-transmitted data is a document, personalized applications may include the Notes application, a printer application, and a schedule application. When the to-be-transmitted data is a hyperlink, a personalized application may include a browser application.

In addition to the matching policy exemplified in Table 1, the electronic device 100 may further obtain more information from the to-be-transmitted content, so as to determine a candidate application that is capable of receiving the to-be-transmitted content and that supports the implementation scenario. Details are not described herein again.

In conclusion, according to the cross-application data transmission method provided in this application, the user can trigger different types of cross-application transmission by using a method of dragging an operation control to a specified hot zone, thereby conveniently and quickly sending to-be-transmitted data corresponding to the operation control to another application.

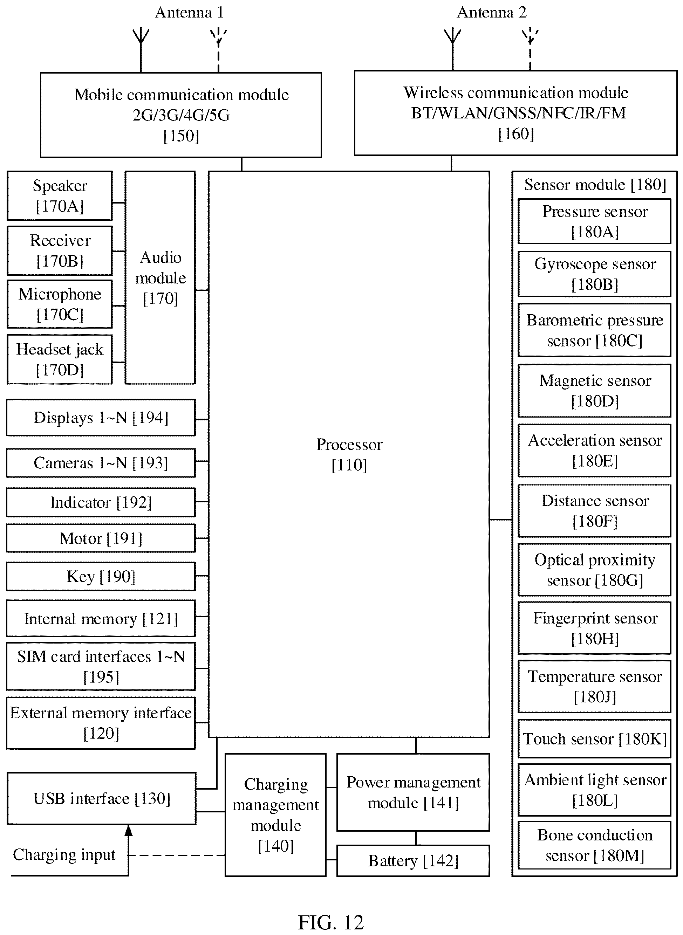

FIG. 12 is a schematic diagram of a structure of an electronic device 100 according to an embodiment of this application.

As shown in FIG. 12, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device 100. In some other embodiments of this application, the electronic device 100 may include more or fewer components than those shown in the figure, combine some components, split some components, or have different component arrangements. The parts shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on instruction operation code and a timing signal, to complete control of instruction fetching and instruction execution. A storage may be further disposed in the processor 110 to store instructions and data.

A wireless communication function of the electronic device 100 may be implemented by using the antenna 1, the antenna 2, the mobile communication module 150, the wireless communication module 160, the modem processor, the baseband processor, and the like.

The electronic device 100 implements a display function by using the GPU, the display 194, the application processor, and the like. In this embodiment of this application, the electronic device 100 may implement, by using the GPU, the display 194, the application processor, and the like, the user interfaces shown in FIG. 1A-FIG. 1H, FIG. 2A-FIG. 2F, FIG. 3A-FIG. 3E, FIG. 5A-FIG. 5G, FIG. 7A-FIG. 7G, and FIG. 9A-FIG. 9G.

The electronic device 100 may implement a shooting function by using the ISP, the camera 193, the video codec, the GPU, the display 194, the application processor, and the like.

The NPU is a neural-network (neural-network, NN) computing processor, which quickly processes input information by referring to a biological neural network structure, for example, by referring to a transferring mode between human brain neurons, and may further perform self-learning continuously. Applications such as intelligent cognition of the electronic device 100, for example, image recognition, face recognition, voice recognition, and text understanding, may be implemented by using the NPU. In this embodiment of this application, the electronic device 100 may recognize and extract a text in a picture and obtain semantic information of the picture by using the NPU, so as to further determine a candidate application by using the semantic information.

The internal memory 121 may include one or more random access memories (random access memory, RAM) and one or more non-volatile memories (non-volatile memory, NVM). The RAM may be directly read and written by the processor 110, may be configured to store an executable program (for example, machine instructions) of an operating system or another running program, and may be further configured to store data of a user, data of an application, and the like. The NVM may also store the executable program, the data of the user, the data of the application, and the like, which may be loaded into the RAM in advance to be directly read and written by the processor 110.

Program code corresponding to the cross-application data transmission method provided in the embodiments of this application may be stored in the NVM. When the foregoing method is executed, the electronic device 100 may load the program code stored in the non-volatile memory into a random memory, and then read and execute the program code by using a processor.

The external memory interface 120 may be configured to connect to an external NVM, to extend a storage capability of the electronic device 100. The external NVM communicates with the processor 110 through the external memory interface 120, to implement a data storage function.

The electronic device 100 may implement audio functions, for example, music playing and recording, by using the audio module 170, the speaker 170A, the receiver 170B, the microphone 170C, the headset jack 170D, the application processor, and the like.

The pressure sensor 180A is configured to sense a pressure signal, and may convert the pressure signal into an electrical signal. In some embodiments, the pressure sensor 180A may be disposed on the display 194. The gyroscope sensor 180B may be configured to determine a motion posture of the electronic device 100. The barometric pressure sensor 180C is configured to measure barometric pressure. The magnetic sensor 180D may be configured to detect a magnetic attraction state, such as opening and closing of a flip cover or a flip holster. The acceleration sensor 180E may detect magnitudes of acceleration in various directions (usually on three axes) of the electronic device 100. The distance sensor 180F is configured to measure a distance. The optical proximity sensor 180G may detect that there is no object near the electronic device 100. The ambient light sensor 180L is configured to sense ambient light brightness. The electronic device 100 may adaptively adjust brightness of the display 194 based on the sensed the ambient light brightness. The fingerprint sensor 180H is configured to collect a fingerprint. The temperature sensor 180J is configured to detect a temperature.

The touch sensor 180K is also referred to as a "touch control device". The touch sensor 180K may be disposed in the display 194. The touch sensor 180K and the display 194 form a touchscreen, also referred to as a "touch control screen". The touch sensor 180K is configured to detect a touch operation performed on or near the touch sensor 180K. The touch sensor may transfer the detected touch operation to the application processor to determine a type of a touch event. A visual output related to the touch operation may be provided by using the display 194. In some other embodiments, the touch sensor 180K may alternatively be disposed on a surface of the electronic device 100, at a position different from that of the display 194. In the embodiments of this application, the electronic device 100 may detect, by using the touch sensor 180K, touch operations performed on a screen, such as tapping the screen, touching and holding, double-tapping, and dragging performed by a user.

The bone conduction sensor 180M may obtain a vibration signal. The key 190 includes a power-on key, a volume key, or the like. The electronic device 100 may receive a key input and generate a key signal input related to user settings and function control of the electronic device 100.

The motor 191 may generate a vibration prompt. The motor 191 may be configured to provide a vibration prompt for an incoming call, and may also be configured to provide vibration feedback for a touch. For example, in the embodiments of this application, when displaying an operation control in a floating state in response to a touch and hold operation, the electronic device 100 may generate vibration by using the motor 191, so as to provide stronger feedback and prompt the user that the touch and hold operation of the user has been detected. The indicator 192 may be an indicator light. The SIM card interface 195 is configured to be connected to a SIM card.

A term "user interface (user interface, UI)" in the specification, claims, and accompanying drawings of this application is a medium interface for interaction and information exchange between a user and an application or an operating system, and implements conversion between an internal form of information and a form acceptable to the user. A user interface of an application is source code written in a specific computer language such as java or an extensible markup language (extensible markup language, XML). The source code of the interface is parsed and rendered on the terminal device, and finally is presented as user-identifiable content, for example, a control such as a picture, a text, or a button. The control (control) is also referred to as a widget (widget), and is a basic element of the user interface. Typical controls include a toolbar (toolbar), a menu bar (menu bar), a text box (text box), a button (button), a scrollbar (scrollbar), a picture, and a text. An attribute and content of the control on the interface are defined by using a label or a node. For example, the control included on the interface is defined in the XML by using a node such as <Textview>, <ImgView>, or <VideoView>. One node corresponds to one control or attribute on the interface. After being parsed and rendered, the node is presented as user-visible content. In addition, interfaces of many applications, such as a hybrid application (hybrid application), usually further include a web page. A web page, also referred to as a page, may be understood as a special control embedded in an application interface. The web page is source code written in a specific computer language, such as hyper text markup language (hyper text markup language, HTML), cascading style sheets (cascading style sheets, CSS), and a java script (JavaScript, JS). The source code of the web page may be loaded and displayed, by using a browser or a web page display component with a function similar to that of the browser, as content recognizable by a user. Specific content included in the web page is also defined by using a label or a node in the source code of the web page. For example, an element and an attribute of the web page are defined in the HTML by using <p>, <img>, <video>, and <canvas>.

The user interface is usually in a representation form of a graphical user interface (graphic user interface, GUI), and the graphical user interface is a user interface that is related to a computer operation and that is displayed in a graphical manner. The graphical user interface may be an interface element such as an icon, a window, or a control that is displayed on a display of an electronic device. The control may include visible interface elements such as an icon, a button, a menu, a tab, a text box, a dialog box, a status bar, a navigation bar, and a Widget.

The singular expression forms "one", "a", "the", "the foregoing", "this", and "this one" used in the specification and the appended claims of this application are also intended to include plural expression forms, unless otherwise specified in the context clearly. It should be further understood that the term "and/or" used in this application indicates and includes any or all possible combinations of one or more listed items. As used in the foregoing embodiments, according to the context, the term "when" may be interpreted as "if", "after", "in response to determining", or "in response to detecting". Similarly, based on the context, the phrase "when determining ..." or "if detecting (a stated condition or event)" may be interpreted as a meaning of "if determining ...", "in response to determining ...", "when detecting (a stated condition or event)", or "in response to detecting ... (a stated condition or event)".

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the procedures of the methods in the foregoing embodiments are implemented. The procedures may be completed by a computer program by instructing related hardware. The program may be stored in the computer-readable storage medium. When the program is executed, the procedures in the foregoing method embodiments may be included. The foregoing storage medium includes various media that can store program code, for example, a ROM, a random access memory RAM, a magnetic disk, or an optical disc.

## Claims

1. A data sharing method, applied to an electronic device, wherein a screen of the electronic device comprises a first region and a second region, the first region and the second region partially overlap, and the method comprises:
when detecting a first operation of dragging a first control into a third region,
displaying an icon of a first application and an icon of a second application in response to the first operation, wherein the third region is a region, in the first region, that does not overlap the second region, and the first application is different from the second application;
detecting a second operation of continuing dragging the first control into a region in which the icon of the first application is located and releasing the first control; and
sharing first data corresponding to the first control with the first application in response to the second operation; and
when detecting a third operation of dragging the first control into the second region and releasing the first control,
sharing the first data with a third application corresponding to the second region in response to the third operation.

2. The method according to claim 1, wherein the method further comprises:
displaying a first interface, wherein the first interface comprises a text;
detecting a fourth operation of selecting a first text from the text;
detecting a fifth operation on the first text; and
displaying the first control in response to the fifth operation, wherein the first data comprises the first text.

3. The method according to claim 2, wherein all or some content of the first text is displayed on the first control.

4. The method according to claim 1, wherein the method further comprises:
displaying a first interface, wherein the first interface comprises a first image;
detecting a sixth operation on the first image; and
displaying the first control in response to the sixth operation, wherein the first data comprises the first image.

5. The method according to claim 4, wherein a thumbnail of the first image is displayed on the first control.

6. The method according to any one of claims 1-5, wherein the second region is a display region of a first floating ball, the first floating ball is a floating ball of the third application, and an icon and/or a name of the third application are/is displayed in the first floating ball.

7. The method according to claim 6, wherein after the sharing the first data with a third application corresponding to the second region, the method further comprises:
displaying a first identifier on the first floating ball, wherein the first identifier is used to indicate that the first data has been shared.

8. The method according to claim 7, wherein the first floating ball comprises a first style and a second style, and after the displaying a first identifier on the first floating ball, the method further comprises:
switching the first floating ball of the first style to the second style, wherein a display region occupied by the first floating ball of the first style on the screen is greater than a display region occupied by the first floating ball of the second style on the screen.

9. The method according to any one of claims 1-8, wherein the first application is different from the third application, and after the sharing first data corresponding to the first control with the first application, the method further comprises:
displaying a second floating ball corresponding to the first application, wherein the icon and/or a name of the first application are/is displayed in the second floating ball.

10. A data sharing method, applied to an electronic device, wherein a screen of the electronic device comprises a first region and a second region, the first region and the second region partially overlap, and the method comprises:
when detecting a first operation of dragging a first control into a first region,
displaying an icon of a first application and an icon of a second application in response to the first operation;
detecting a second operation of continuing dragging the first control into a region in which the icon of the first application is located and releasing the first control; and
sharing first data corresponding to the first control with the first application in response to the second operation; and
when detecting a third operation of dragging the first control into a fourth region and releasing the first control,
sharing the first data with a third application corresponding to the fourth region in response to the third operation, wherein the fourth region is a region, in the second region, that does not overlap the first region.

11. The method according to claim 10, wherein the screen comprises a first window and a second window, the first window is configured to display a user interface of a fourth application, the second window is configured to display a user interface of the third application, the second region is a display region of the second window, and the method further comprises:
selecting the first data from the first window; and
detecting a fourth operation on the first data, and displaying the first control in response to the fourth operation.

12. The method according to claim 11, wherein the first window and the second window are tiled for display, and areas of the first window and the second window are equal to an area of the screen; or the second window is displayed in a form of a floating window over the first window; or the first window is displayed in a form of a floating window over the second window.

13. The method according to claim 11 or 12, wherein some or all content of the first data is displayed on the first control.

14. The method according to any one of claims 11-13, wherein the selecting the first data from the first window specifically comprises:
obtaining a text in the first window; and
selecting a first text from the text in the first window, wherein the first data comprises the first text.

15. The method according to any one of claims 11-13, wherein the selecting the first data from the first window specifically comprises:
selecting a first image from one or more images displayed in the first window, wherein the first data comprises the first image.

16. The method according to any one of claims 11-15, wherein after the sharing the first data with a third application corresponding to the fourth region, the method further comprises: displaying the first data in the second region.

17. The method according to any one of claims 1-16, wherein the first region comprises a right-side hot zone and/or a left-side hot zone, the right-side hot zone is a rectangular touch region determined based on a right side of the screen, and the left-side hot zone is a rectangular touch region determined based on a left side of the screen.

18. The method according to any one of claims 1-17, wherein the first application and the second application are applications that are capable of receiving the first data and that are determined based on a type and/or semantic information of the first data.

19. The method according to any one of claims 1-18, wherein the displaying an icon of a first application and an icon of a second application specifically comprises:
displaying the icon of the first application and the icon of the second application on the right side or the left side of the screen, wherein the icon of the first application and the icon of the second application are vertically arranged.

20. The method according to any one of claims 1-19, wherein after the sharing first data corresponding to the first control with the first application, the method further comprises:
stopping displaying the icon of the first application and the icon of the second application.

21. An electronic device, comprising one or more processors and one or more memories, wherein the one or more memories are coupled to the one or more processors, the one or more memories are configured to store computer program code, the computer program code comprises computer instructions, and when executing the computer instructions, the one or more processors are enabled to perform the method according to any one of claims 1-20.

22. A computer-readable storage medium, comprising instructions, wherein when the instructions are run on an electronic device, the method according to any one of claims 1-20 is performed.
